# EUROPÄISCHE PATENTSCHRIFT

(11) **EP 3 941 713 B1**
(45) Veröffentlichungstag und Bekanntmachung des Hinweises auf die Patenterteilung: **08.03.2023**
(21) Anmeldenummer: 20714956.8
(22) Anmeldetag: 20.03.2020
(51) Int. Cl.: B29C 64/118, B33Y 30/00, B33Y 10/00, B29C 64/295, B29C 64/209, B33Y 40/00, H05B 6/70, H05B 6/80, B29C 35/08, B22F 12/10, B22F 3/20, B22F 12/00, B22F 12/53, B22F 3/105

(54) **ADDITIVER HERSTELLUNGSPROZESS EINER FORM UNTER VERWENDUNG VON MIKROWELLENSTRAHLUNG, MIKROWELLENDRUCKVORRICHTUNG UND ADDITIVE DRUCKVORRICHTUNG FÜR 3D-DRUCK EINES EINEN FASERVERBUNDWERKSTOFF UMFASSENDEN FILAMENTS**
PROCESS FOR THE ADDITIVE MANUFACTURE OF A FORM USING MICROWAVE RADIATION, MICROWAVE PRINTING DEVICE AND ADDITIVE PRINTING DEVICE FOR 3D PRINTING OF A FILAMENT COMPRISING A FIBRE COMPOSITE MATERIAL
PROCÉDÉ DE FABRICATION ADDITIVE D'UNE FORME À L'AIDE D'UN FAISCEAU DE MICRO-ONDES, DISPOSITIF D'IMPRESSION À MICRO-ONDES ET DISPOSITIF D'IMPRESSION ADDITIVE DESTINÉ À L'IMPRESSION 3D D'UN FILAMENT COMPRENANT UNE MATIÈRE COMPOSITE FIBREUSE

(30) Priorität: 20.03.2019 DE 102019001976
(43) Veröffentlichungstag der Anmeldung: 26.01.2022
(73) Patentinhaber: Karlsruher Institut für Technologie, 76131 Karlsruhe (DE)
(72) Erfinder: LI, Nanya, 76297 Stutensee (DE); LINK, Guido, 75045 Walzbachtal (DE); JELONNEK, John, 89079 Ulm (DE)
(74) Vertreter: Müller-Boré & Partner Patentanwälte PartG mbB
(86) Internationale Anmeldenummer: PCT/EP2020/057743
(87) Internationale Veröffentlichungsnummer: WO 2020/188075

(56) Entgegenhaltungen:
- EP-A1- 2 916 618
- EP-A1- 3 124 213
- DE-A1-102015 002 967
- KR-A- 20140 001 287
- US-A- 5 948 194
- US-A1- 2017 266 728

## Beschreibung

Die vorliegende Erfindung betrifft eine Mikrowellendruckvorrichtung, ein System zur additiven Herstellung von Formen umfassend die Mikrowellendruckvorrichtung und einen additiven Herstellungsprozess einer Form unter Verwendung von Mikrowellenstrahlung.

Faserverstärkte Polymerverbundstoffe sind Materialien, die Polymermaterialien mit Fasern kombinieren, wobei das Polymermaterial eine Matrix bildet und durch die Fasern verstärkt wird. Kohlenstofffaserverstärkte Polymerverbundstoffe enthalten als Fasern Kohlenstofffasern. Heutzutage werden große Mengen von faserverstärkten Verbundteilen beispielsweise in den Bereichen Luft- und Raumfahrt, Transport, saubere Energie und Sport aufgrund ihrer deutlichen Vorteile von hoher Festigkeit, geringer Dichte, langer Lebensdauer und Korrosionsbeständigkeit in einer anspruchsvollen Umgebung verwendet.

Die traditionelle Autoklaven-Härtungstechnologie ermöglicht aufgrund ihrer guten Anpassungsfähigkeit die Herstellung einer großen Menge von Verbundteilen mit verschiedenen Formen, einfachen Herstellungsverfahren und guter Reproduzierbarkeit. Jedoch weist diese traditionelle Technologie einen sehr langen Aushärtezyklus und einen hohen Energieverbrauch auf. So kann zum Beispiel die Aushärtezeit für ein Hochleistungsverbundbauteil eines Flugzeugs 24 Stunden überschreiten und der durchschnittliche Stromverbrauch eines 14 m langen Autoklaven mit einem Durchmesser von 5 m mehr als 2500 kW/h betragen. Nach 24 Stunden beträgt der Stromverbrauch 60000 kW oder mehr, was dem Stromverbrauch einer Familie in 17 Jahren entspricht.

Des Weiteren wird für jede Änderung des Bauteildesigns oder für jedes abweichend geformte Teil ein neues Formwerkzeugs benötigt. Normalerweise ist die Herstellung eines solchen Formwerkzeugs sehr teuer und kostet viel Zeit.

Diese Nachteile betreffen auch entsprechende Herstellungsverfahren von faserverstärkten Verbundteilen für andere Bereiche. Daher wurde aufgrund des hohen Zeitaufwands, der hohen Kosten und der Inflexibilität hinsichtlich der Form die Entwicklung dieser Technologie eingeschränkt.

Additive Herstellungsverfahren, die auch als "3D-Drucke" bekannt sind, verwenden häufig thermoplastische Kunststoffe oder Polymerharze.

Bei einem additiven Herstellungsverfahren wird aus einem oder mehreren Werkstoffen (z.B. festen oder flüssigen Werkstoffen) eine Form bzw. ein Objekt in drei Dimensionen additiv, d.h. durch Ablagern von Material, gebildet. Der Aufbau der Form erfolgt computergesteuert nach vorgegebenen Maßen und Formen (CAD-Modelle). Der Herstellungsprozess (3D Druckprozess) erfolgt in der Regel schichtweise, wobei das Material Schicht für Schicht aufgetragen wird. Volumetrische additive Fertigungsprozesse sind ebenfalls möglich. Die additive Fertigung ermöglicht es, höchst komplexe Formen herzustellen, die gleichzeitig extrem leicht und stabil sein können. Ferner ist eine aufwändige Herstellung von teuren Formwerkzeugen für die erwünschten Produkte nicht notwendig. Weitere Vorteile der additiven Herstellungsverfahren sind z.B. hohe Flexibilität, schneller Herstellungszyklus, geringer Energie- und/oder Materialverbrauch, einfache Handhabung und niedrige Kosten.

Es existieren eine Vielzahl von unterschiedlichen additiven Herstellungsverfahren.

Beispielhafte additive Herstellungsverfahren sind selektives Laserschmelzen, direktes Metall-Lasersintern, Stereolithographie, Schmelzablagerungsmodellierung, laminierte Objektherstellung und Elektronenstrahlschmelzen. Diese Druckverfahren haben jedoch mehrere Nachteile und Einschränkungen. Zum Beispiel gibt es einen Zusammenhang zwischen der Druckgeschwindigkeit, den mechanischen Eigenschaften der gedruckten Teile und den Kosten.

Seit kurzem werden Nano/Kurz/Endlos-Fasern und andere Verstärkungsstoffe der Polymermatrix zugefügt, um die mechanischen Eigenschaften von 3D-Druckteilen zu verbessern. So wurde zum Beispiel eine Maschine zum Herstellen von dreidimensional verknüpften Verbundkomponenten vorgeschlagen, wobei die verknüpften Verbundkomponenten zueinander parallel verlaufende Kettfäden aufweisen (vgl. US 2018/0038045 A1).

Des Weiteren wurde ein Drucksystem zur Herstellung von Formen aus einem Matrixmaterial mit orientierten Verstärkungsfasern vorgeschlagen (vgl. US 2018/0036946 A1). Eine 3D-Druckmaschine zum Erzeugen eines ersten Druckpfads für das Matrixmaterial und eines zweiten Weges für das Fasermaterial wurde in US 2018/0022032 A1 beschrieben.

Die oben genannten Druckverfahren können zwar faserverstärkte Verbundteile herstellen, jedoch waren Versuche, die Druckgröße, die Druckgeschwindigkeit, den Faservolumengehalt und die Verbundfestigkeit der Produkte von additiven Herstellungsverfahren zu verbessern, nur von begrenztem Erfolg. So können durch die bekannten 3D-Druckverfahren zwar eine Vielzahl von Formen hergestellt werden, die Druckgröße ist jedoch normalerweise durch die Größe des Filaments begrenzt. Wenn große faserverstärkte Verbundteile benötigt werden, kann die herkömmliche thermische Heizdüse diese Anforderungen nicht erfüllen. Für die Wärmeübertragung von einem widerstandsbeheizten Metallteil auf das Material des Filaments ist eine lange Zeit erforderlich. Um das Material im Kern eines Filaments mit großem Durchmesser zu schmelzen, wird eine hohe Erwärmungstemperatur angewandt. Dabei kann es allerdings dazu kommen, dass das äußere Material zerfällt, während der Kern des Materials immer noch eine sehr niedrige Temperatur aufweist und nicht schmilzt. Zudem kann die Druckgeschwindigkeit aufgrund des zeitaufwendigen Wärmeübertragungsprozesses nicht erhöht werden. Auch für die Erhöhung des Faservolumengehalts und der Verbundfestigkeit von Filamenten mit großem Durchmesser wird in den bekannten Verfahren keine Lösung erzielt.

In jüngerer Zeit wurde die Mikrowellentechnologie als eine Alternative zum konventionellen Erwärmen der Materialien angesehen. Die Vorteile des Erhitzens unter Einsatz von Mikrowellenstrahlung im Vergleich zu herkömmlichem Erhitzen umfassen: (i) volumetrisches und selektives Erhitzen, (ii) schnelle Heizraten, (iii) schnelles Starten und Stoppen, (iv) Verkürzung der Aushärtezeit, (v) Einsparung von Energie, (vi) höheres Sicherheits- und Automatisierungsniveau und (vii) Umweltfreundlichkeit. Während des Mikrowellenheizprozesses wird Energie durch ein elektromagnetisches Feld direkt im Material bereitgestellt. Dies führt zu einer schnellen Erwärmung über die gesamte Materialdicke mit einer gleichmäßigen Temperaturverteilung, reduziertem Energieverbrauch und verringerten Kosten. Ein bereits bekannter Mikrowellen-3D-Druckprozess verwendet eine große Kammer, die den 3D-Drucker abdeckt (vgl. US 2015/0054204 A1). Alternativ zu diesem bekannten Verfahren wird in einem weiteren Verfahren Induktionsheizen anstelle von Mikrowellenstrahlung zur Verarbeitung eines Metallmaterials eingesetzt (vgl. US 2018/0021877 A1).

Die Druckschrift US 2015/0054204 A1 beschreibt eine Vorrichtung, in der das additive Herstellungssystem in einer Mikrowellenkammer vorliegt. Daher können Metallgegenstände nicht in dieser Kammer eingesetzt werden, es sei denn, dass diese durch eine Abschirmung abgedeckt werden. In diesem System wird das Filament in einer Röhre erhitzt, bevor es die Druckdüse erreicht. Ein weiteres Problem ist die ungleichmäßige Mikrowellenfeldverteilung in der Kammer. Metallteile oder -ecken führen zum Fokussieren des elektrischen Feldes und verbrauchen somit Mikrowellenenergie. Dies kann dazu führen, dass das Material, welches gedruckt werden soll, nicht geschmolzen werden kann. Ein zusätzliches Problem ist auch, dass die Temperatur des Filaments nicht gesteuert werden kann.

Die Druckschrift US 2018/0021877 A1 beschreibt eine Vorrichtung mit gewundenen spiralförmigen Metalldrähten, die um die Druckdüse angeordnet sind, um ein niederfrequentes elektromagnetisches Feld zu erzeugen und das Material zu erhitzen. Dabei ist die Vorrichtung frei geöffnet und hat keine Abschirmvorrichtung, um das Austreten von Mikrowellen zu verhindern.

Die Druckschrift WO 2012/127456 A1 beschreibt eine Vorrichtung zur additiven Herstellung von Formen umfassend einen offenen Nahfeld-Mikrowellen-Applikator mit integrierter Materialführung. Die Mikrowellenstrahlung wird in einem kleinen Bereich an der Spitze des Mikrowellen-Applikators lokalisiert. Dadurch wird ein thermisches Durchgehen mit Plasmaerzeugung induziert, welches das Material an der Spitze des Mikrowellen-Applikators schnell erhitzt. Ein Nachteil dieser Vorrichtung ist es, dass Mikrowellenstrahlung, die für Menschen schädlich sein kann, aus dem offenen Mikrowellen-Applikator in die Umgebung austritt. Die austretende Mikrowellenstrahlung kann insbesondere bei verlustarmen Werkstoffen (wie z.B. Polymere) sehr stark sein und die zulässigen Grenzen überschreiten.

Die Druckschriften US 2017/02667728 A1, KR 10-2014-0001287, DE 10 2015 002967 A1 und US 5 948 194 beschreiben Vorrichtungen zum additiven Drucken, wobei das Druckmaterial mittels Mikrowellenstrahlung erhitzt wird.

Somit können diese bekannten Vorrichtungen und Verfahren aus dem Stand der Technik die Anforderungen für die großtechnische Anwendung von faserverstärkten Verbundwerkstoffen im 3D-Druck nicht erfüllen, wobei insbesondere eine Verbesserung der Druckgeschwindigkeit, des Faservolumengehalts und der mechanischen Festigkeit angestrebt wird.

Der vorliegenden Erfindung liegt daher die Aufgabe zugrunde, ein Verfahren bereitzustellen, das die Verwendung eines Faserverbundwerkstoffs im 3D-Druck unter Verbesserung der Druckgeschwindigkeit, des Faservolumengehalts und der mechanischen Festigkeit ermöglicht, und eine Vorrichtung, die in einem solchen vorteilhaften Verfahren eingesetzt werden kann.

Diese Aufgabe wird durch die in den Ansprüchen gekennzeichneten Ausführungsformen gelöst.

Ein erster Aspekt betrifft eine Mikrowellendruckvorrichtung. Die Mikrowellendruckvorrichtung umfasst:
einen Einlass (Filamenteinlass) für ein Filament,
einen Auslass (Filamentauslass) für das Filament,
eine Mikrowellenheizvorrichtung zum Erhitzen des Filaments mittels Mikrowellenstrahlung,
wobei die Mikrowellenheizvorrichtung zumindest einen Koaxialresonator umfasst;
wobei der Koaxialresonator einen mit elektrisch leitendem Material umgebenden Hohlraum (Resonanzhohlraum oder Resonanzkammer) bildet, und einen Mikrowellenstrahlungseingang zum Einkoppeln von Mikrowellenstrahlung umfasst. Anders ausgedrückt kann der Koaxialresonator ein Hohlraumresonator sein, wobei der Hohlraum bzw. die Resonanzkammer mit einem dielektrischen Material (wie z.B. Luft) gefüllt ist. Das elektrisch leitende Material, welches den Hohlraum umgibt bzw. den Hohlraum bildet, wird im Rahmen der Anmeldung Außenleiter genannt. Das Erhitzen des Filaments findet im Koaxialresonator statt.

Der Resonator ist ein Koaxialresonator, welcher durch einen Außenleiter, der einen Hohlraum bzw. eine Resonanzkammer bildet, und einen koaxialen Innenleiter gebildet wird, und einen Mikrowellenstrahlungseingang zum Einkoppeln von Mikrowellenstrahlung umfasst. Der koaxiale Innenleiter befindet sich innerhalb des durch den Außenleiter gebildeten Hohlraums bzw. innerhalb der durch den Außenleiter gebildeten Resonanzkammer und ist parallel zu zumindest einer Achse des den Hohlraum bildenden Außenleiters, insbesondere parallel zu einer Längsachse. Vorzugsweise weisen der Außenleiter bzw. Hohlraum und der Innenleiter eine gemeinsame Achse auf. Der koaxiale Innenleiter kann sich über die gesamte Länge des Koaxialresonators oder über lediglich einen Teil der Gesamtlänge des Koaxialresonators erstrecken.

Der Innenleiter kann elektrisch mit dem Außenleiter verbunden sein. Beispielsweise können ein Ende oder beide Enden des Innenleiters mit dem Außenleiter elektrisch verbunden sein. Der Innenleiter kann z.B. zu einer Stirnwand bzw. Stirnfläche oder zu den beiden Stirnwänden bzw. Stirnwänden des den Hohlraum bildenden Außenleiters elektrisch verbunden sein.

Unter dem Begriff "Mikrowellendruckvorrichtung" wird eine Vorrichtung zur additiven Herstellung von (drei-dimensionalen) Formen bzw. Objekten unter Verwendung von Mikrowellenstrahlung oder ein Bestandteil davon (wie z.B. der Druckkopf) verstanden.

Unter dem Begriff "Filament" wird ein Material in Form eines kontinuierlichen Drahtes oder Fadens verstanden, das als Ausgangsmaterial eines Druckverfahrens dienen kann. Das Material des Filaments ist nicht besonders eingeschränkt, solange dieses durch Mikrowellenstrahlung erwärmt werden kann bzw. eine ausreichende Mikrowellenabsorption aufweist. Das Filament kann elektrisch leitend oder elektrisch nicht leitend sein.

Das Filament kann beispielsweise aus einem Faserverbundwerkstoff umfassend zumindest eine Faser und Matrixmaterial gebildet sein.

Die Faser bzw. die Fasern des Faserverbundwerkstoffs kann bzw. können beispielsweise mindestens eine Art von Fasern aus Kohlenstofffasern, Metallfasern, Glasfasern, Graphitfasern, Kunststofffasern, Keramikfasern, Borfasern, Stahlfasern und Steinfasern sein. Beispiele für Kohlenstofffasern sind 1K, 3K, 6K, 12K oder 24K Kohlenstofffasern. Dabei bedeutet "1K", dass 1000 Einzelfasern zu einem Garn zusammengefasst sind. Die weiteren Bezeichnungen sind entsprechende Vielfache. Bevorzugt werden 1K Kohlenstofffasern verwendet. Beispiele für Metallfasern sind Goldfasern, Silberfasern, Eisenfasern, Wolframfasern, Aluminiumfasern, Kupferfasern, Bleifasern und Fasern, die aus einer Legierung bestehen, welche sich aus Metallen der zuvor genannten Fasern zusammensetzt. Beispiele für Kunststofffasern sind Aramidfasern, wie z.B. Kevlarfasern, und Polyethylenfasern. Beispiele für Keramikfasern sind Aluminiumoxidfasern, Mullitfasern, SiBCN-Fasern, SiCN-Fasern und SiC-Fasern. Beispiele für Steinfasern sind Basaltfasern.

In einer bevorzugten Ausführungsform sind die Fasern mindestens eine Art von Fasern aus Kohlenstofffasern, Graphitfasern, Glasfasern, Kupferfasern, Siliziumkarbidfasern und/oder Aramidfasern (wie z.B. Kevlarfasern). Eine Mischung aus unterschiedlichen Fasern ist ebenfalls möglich.

Das Matrixmaterial des Faserverbundwerkstoffs kann ein Kunststoff oder Harz sein, z.B. ein Thermoplast und/oder ein Duroplast. Beispiele für Thermoplasten sind Polyetheretherketon (PEEK), Polyphenylensulfid (PPS), Polysulfon (PSU), Polyetherimid (PEI) und Polytetrafluorethen (PTFE). Beispiele für Duroplasten sind Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR) und Aminoharze, wie z.B. Melaminharz (MF/MP) und Harnstoffharz (UF). Das Matrixmaterial kann ebenfalls ein komposites Material sein, wie z.B. eine Mischung aus Kunststoff oder Harz mit Karbonpulver, Siliziumkarbid, Keramik, Metall, Graphen, und/oder Kohlenstoffnanoröhren (CNT),

In einer bevorzugten Ausführungsform ist der Faserverbundwerkstoff ein kohlenstofffaserverstärkter Kunststoff, ein glasfaserverstärkter Kunststoff, ein kupferfaserverstärkter Kunststoff oder ein aramidverstärkter (z.B. kevlarverstärkter) Kunststoff.

Die Länge der Fasern des Faserverbundwerkstoffs ist nicht besonders eingeschränkt. Die Fasern können beispielsweise Nanofasern, Kurzfasern oder kontinuierliche Fasern sein. Gemäß einer bevorzugten Ausführungsform sind die Fasern des Faserverbundwerkstoffs kontinuierliche Fasern. Durch die Verwendung von kontinuierlichen Fasern ist es in der Regel nicht erforderlich, Räder und/oder Motoren und/oder andere Vorrichtungen zum Ziehen des Filaments beim Drucken einzusetzen. Denn sobald die Fasern des Faserverbundwerkstoffs die Druckplattform berühren und erhärten, können diese Fasern die Kraft bereitstellen, das Filament zu ziehen (z.B. aus der Druckdüse eines Extrudierelements).

In einer bevorzugten Ausführungsform umfasst der Faserverbundwerkstoff 1K Kohlenstofffasern und PEEK als Matrixmaterial.

Das Filament erstreckt sich vom Einlass bis zum Auslass der Mikrowellendruckvorrichtung und wird kontinuierlich durch die Mikrowellendruckvorrichtung bewegt bzw. befördert. Bei diesem Durchgang wird das Filament in der Mikrowellenheizvorrichtung mit dem Resonator erwärmt bzw. erhitzt. Der Resonator ist ein Koaxialresonator. Das Filament kann mittig im Resonator angeordnet sein und sich entlang einer Längsachse bzw. Symmetrieachse des Resonators bzw. der Mikrowellenheizvorrichtung erstrecken. Der Durchmesser des Filaments kann z.B. zwischen 0,01 mm bis 100 mm, beispielsweise zwischen 0,05 bis 50 mm oder zwischen 0,1 bis 10 mm sein.

Um den Durchgang des Filaments zu ermöglichen, weist der Resonator ebenfalls einen Einlass und einen Auslass für das Filament auf, (z.B. in Form von zwei Öffnungen im Außenleiter), wobei sich das Filament vom Einlass bis zum Auslass erstreckt. Das Erhitzen des Filaments findet während der vorzugsweise kontinuierlichen Bewegung des Filaments durch den Resonator statt.

Der Resonator umfasst zumindest einen Außenleiter, der einen Hohlraum (Resonanzhohlraum oder Resonanzkammer) bildet. Ferner umfasst der Resonator zumindest einen Innenleiter, der innerhalb des Außenleiters bzw. des Hohlraums angeordnet ist. Vorzugsweise ist der Innenleiter koaxial zum Außenleiter bzw. zum Hohlraum angeordnet. Der Außenleiter bzw. Hohlraum und der Innenleiter weisen somit eine gemeinsame Achse auf.

Durch die Verwendung des Resonators wird eine resonante Mikrowellenstrahlung bereitgestellt, die ein besonders vorteilhaftes Erwärmen des Filaments ermöglicht. Insbesondere kann durch eine geeignete Dimensionierung des Resonators eine Verteilung der im Resonator gebildeten stehenden Wellen der Mikrowellenstrahlung realisiert werden, die ein besonders vorteilhaftes, vorzugsweise gleichmäßiges Erwärmen des Filaments ermöglicht. Ferner ist das Austreten von potenziell schädlicher Mikrowellenstrahlung aus dem Resonator relativ gering, was die Sicherheit der Mikrowellendruckvorrichtung verbessert und die Absorption der Mikrowellenstrahlung durch das Filament maximiert. Die Mikrowellendruckvorrichtung kann somit klein und kompakt gestaltet werden. Weitere Vorteile sind eine hohe Druckgeschwindigkeit und eine hohe mechanische Stabilität des Druckerzeugnisses. Ferner ist es möglich, schnell und effizient große Druckflächen zu bedrucken. In einem Beispiel kann das Erwärmen des Filaments ausschließlich im Resonator stattfinden, was zu einem kleinen und kompakten Aufbau beiträgt.

Des Weiteren können Koaxialresonatoren nur durch TEM Moden der elektromagnetischen Strahlung angeregt werden und weisen eine deutlich höhere Bandbreite auf als andere Wellenleiter (siehe z.B. Lo, Y. T., Lee, S. W. (2013) "Antenna Handbook: theory, applications, and design", veröffentlicht von Springer Science & Business Media, Seiten 28-5 und 21-57). Das elektrische Feld in einem Koaxialresonator ist in die Richtung senkrecht zum Innenleiter polarisiert, weist ein Maximum auf dem Innenleiter auf und nimmt proportional zu 1/r in radialer Richtung ab. Dadurch kann eine maximale und sehr effektive Absorption der Mikrowellenenergie auf dem Innenleiter und somit im Filament gewährleistet werden. Ferner kann eine gleichmäßige Erwärmung des Filaments erzielt werden.

Der Innenleiter kann z.B. aus einem metallischen Werkstoff (wie z.B. Messing) oder aus einem anderen elektrisch leitfähigen Material gebildet werden. Der Innenleiter kann z.B. in Form einer Röhre sein, durch die sich das Filament erstreckt.

Vorzugsweise ist das Filament selbst elektrisch leitfähig und bildet den Innenleiter oder einen Teil des Innenleiters des Resonators. Wenn das Filament aus einem Faserverbundwerkstoff gebildet ist, können die Faser bzw. die Fasern, das Matrixmaterial oder beide elektrisch leitend sein.

Aufgrund der Verwendung eines elektrisch leitfähigen Filaments als Innenleiter oder als Teil des Innenleiters des Koaxialresonators, ist die Richtung des elektrischen Feldes in dem Resonator senkrecht zur axialen Richtung des Filaments, wodurch die Mikrowellenstrahlung in das Material eindringen und dabei dieses über den gesamten Volumenquerschnitt, d.h. innen und außen, erwärmen kann. Dabei kann, abhängig von den Mikrowelleneigenschaften, eine gleichmäßige Temperaturverteilung sogar bei Filamenten mit großem Durchmesser und bei Verfahren mit einer hohen Druckgeschwindigkeit erreicht werden. Diese vorteilhaften Effekte können sogar bei einem Filament erzielt werden, das einen Faserverbundwerkstoff mit sehr hohem Faseranteil bzw. Faservolumengehalt umfasst. Durch die gleichmäßige Temperaturverteilung kann die Verbundfestigkeit zwischen Fasern und Matrixmaterial verbessert werden, so dass eine Vorimprägnierung bereits vor dem Extrudieren oder Pultrudieren ermöglicht wird, was schließlich zu einer hohen mechanischen Festigkeit der gedruckten Teile führt. Außerdem ist die Verwendung von Formen, durch die die Struktur des zu druckenden Teils festgelegt wird, vorteilhafterweise nicht erforderlich.

Die Form des Resonators ist nicht besonders eingeschränkt. Vorzugsweise wird die Form des Resonators berechnet und/oder optimiert, um eine vorgegebene bzw. gewünschte Verteilung der stehenden Wellen bzw. eine vorgegebene Modenverteilung zu erzielen. Die Länge des Resonators ist idealerweise eine resonante Länge, und kann beispielsweise mindestens ein Viertel der Wellenlänge λ der Mikrowellenstrahlung bzw. ein ungeradzahliges Vielfaches der Viertelwellenlänge λ/4 oder ein Vielfaches der halben Wellenlänge λ/2 betragen.

Wenn das Filament auf einem elektrisch leitfähigen Material basiert (wie z.B. ein Filament aus kontinuierlicher Karbonfaser in einer dielektrischen Matrix oder eine beliebige Faser in einer elektrisch leitfähigen Matrix) und den Innenleiter des Koaxialresonators, bildet, beträgt die Länge des Resonators vorzugsweise mindestens λ/2 oder ein Vielfaches von λ/2.

Bei einem Innenleiter (z.B. in Form einer Röhre aus einem elektrisch leitfähigen Material), welcher an einem Ende mit dem Außenleiter elektrisch verbunden ist und sich nicht über die gesamte Länge des den Hohlraum bildenden Außenleiters erstreckt, und einem nicht elektrisch leitfähigen Filament mit einer ausreichenden dielektrischen Absorption, beträgt die Länge des Koaxialresonators vorzugsweise mindestens λ/4 oder ein ungeradzahliges Vielfaches von λ/4.

Der Durchmesser des Resonators ist nicht besonders eingeschränkt und kann beispielsweise in Abhängigkeit vom Durchmesser des Filaments gewählt werden. Der Resonator bzw. der Außenleiter kann beispielsweise zylindrisch sein und eine Länge von mindestens λ/4 aufweisen. Die Länge des zumindest einen Resonators kann variabel bzw. einstellbar sein. Dadurch kann z.B. eine besonders vorteilhafte Verteilung der Mikrowellenstrahlung (Resonanzstrahlung) in dem Resonator realisiert werden. Wie oben ausgeführt ist die Länge des Resonators idealerweise eine resonante Länge, d.h. ein ungeradzahliges Vielfaches der viertel Wellenlänge λ/4 oder ein Vielfaches der halben Wellenlänge λ/2.

Die "Mikrowellendruckvorrichtung" kann eine "Mikrowellenextrudiervorrichtung" sein, d.h. eine Vorrichtung zur additiven Herstellung von Formen, die unter Verwendung von Mikrowellenstrahlung zumindest ein Filament erhitzt und dieses durch ein Extrudierelement extrudiert, um die Form zu bilden. Es ist ebenfalls möglich (insbesondere bei einem endlosen Filament), das Filament zu pultrudieren.

Insbesondere kann die Mikrowellendruckvorrichtung ein Extrudierelement oder ein Pultrudierelement mit einer Druckdüse zum Extrudieren oder Pultrudieren des erhitzten Filaments umfassen. Unter dem Begriff "Extrudieren" wird insbesondere ein Verfahren verstanden, in dem ein Ausgangsmaterial durch eine Form gepresst wird, wobei durch das Pressen ein Material definierter Form mit z.B. einer kleineren und/oder anderen Querschnittsfläche als das Ausgangsmaterial erhalten wird. Ein Pultrusionsverfahren oder Strangziehverfahren ist ein kontinuierliches Verfahren bei dem das Ausgangsmaterial kontinuierlich durch ein Werkzeug (z.B. einer Druckdüse) gezogen wird. Die "Mikrowellendruckvorrichtung" kann dementsprechend eine "Mikrowellenpultrusionsvorrichtung" sein.

Die Druckdüse kann ausgebildet sein, den Querschnitt (z.B. die Form und/oder den Durchmesser) des Filaments zu verändern.

Der Querschnitt des extrudierten oder des pultrudierten Filaments, das aus der Druckdüse extrudiert oder pultrudiert wird, kann mindestens eine der Formen, ausgewählt aus einer Ellipse, einer rechteckigen Form, einer Kreisform, einer hohlen Ellipse, einer hohlen rechteckigen Form, einer hohlen Kreisform, einer L-Form, einer U-Form, einer I-Profilform, einer Gitterträgerform und einer Kombination der vorstehend genannten Formen, aufweisen. In einem Beispiel kann mindestens eine Oberfläche des extrudierten oder pultrudierten Filaments, das aus der Druckdüse hinaustritt, flächenförmig bzw. eben sein. Dadurch kann das Filament besonders leicht in Kontakt mit einer Druckplattform gebracht werden, wodurch die Qualität und/oder die Geschwindigkeit des Druckprozesses erhöht werden können.

Das Extrudierelement oder Pultrudierelement und insbesondere die Druckdüse ist bzw. sind am Filamentauslass oder in dessen Nähe angeordnet. Das Extrudierelement oder Pultrudierelement und insbesondere die Druckdüse kann bzw. können mit dem Filamentauslass direkt oder indirekt (d.h. mittels weiterer Verbindungselemente) verbunden werden.

Das Extrudierelement oder Pultrudierelement und insbesondere die Druckdüse kann bzw. können zumindest teilweise durchlässig bzw. transparent für Mikrowellenstrahlung sein. Das Filament kann somit im Extrudierelement oder Pultrudierelement bzw. in der Druckdüse weiter erhitzt werden, z.B. um das Druckverfahren zu beschleunigen. Es ist ebenfalls möglich, die im Extrudierelement oder Pultrudierelement bzw. in der Druckdüse vorhandene Mikrowellenstrahlung zum Unterstützen oder Durchführen eines Schneidevorgangs des extrudierten Filaments einzusetzen.

Ferner kann das Extrudierelement oder Pultrudierelement bzw. die Druckdüse eine Schneidevorrichtung zum Durchschneiden des extrudierten Filaments umfassen. Die Schneidevorrichtung kann z.B. aus mindestens einer Schneide bestehen oder mindestens eine Schneide umfassen. Die Schneide kann z.B. um den Auslass der Druckdüse angeordnet sein und mit der Druckdüse verbunden sein. Die Schneidevorrichtung kann auch eine von dem Extrudierelement oder Pultrudierelement bzw. der Druckdüse separate Vorrichtung sein.

Anschließend an das Extrudieren oder Pultrudieren kann das Filament auf einer Plattform abgeschieden werden. Dabei kann die Position des Extrudierelements oder Pultrudierelement bzw. der Druckdüse relativ zu der Plattform durch einen Druckpfad vorgegeben werden. Zum rascheren Abkühlen des extrudierten oder pultrudierten Filaments kann eine Kühlvorrichtung vorgesehen werden.

Wenn das Filament elektrisch leitfähig ist, kann die Mikrowellendruckvorrichtung ferner zumindest zwei Mikrowellenfilter zum Reduzieren oder Verhindern der aus dem Resonator austretenden Mikrowellenstrahlung (d.h. zum Abschirmen des Resonators) umfassen, wobei jeder der Mikrowellenfilter einen Durchlass (z.B. in Form einer Öffnung) für das Filament aufweist. Bei einem nicht elektrisch leitfähigen Filament ist, abhängig von dem Durchmesser des Filaments und dessen Mikrowelleneigenschaften, eine Abschirmung des Resonators mit Mikrowellenfiltern in der Regel nicht notwendig.

Die verwendeten Mikrowellenfilter sind nicht besonders eingeschränkt, solange sie Mikrowellenstrahlung zumindest teilweise abschirmen können. Die Mikrowellenfilter können z.B. mit einem, vorzugsweise verlustarmen Dielektrikum gefüllt sein, wie z.B. Keramik, Glass, Polytetrafluorethylen (PTFE), Luft oder einem anderen geeigneten Material.

Mindestens ein Mikrowellenfilter kann am Filamenteinlass oder in dessen Nähe angeordnet sein. Der Mikrowellenfilter kann mittelbar (mittels geeigneter Verbindungselemente) oder unmittelbar (direkt) mit dem Filamenteinlass verbunden sein. Mindestens ein anderes Mikrowellenfilter kann am Filamentauslass oder in dessen Nähe angeordnet werden. Der Mikrowellenfilter kann mittelbar (mittels geeigneter Verbindungselemente) oder unmittelbar (direkt) mit dem Filamentauslass verbunden sein. Es ist möglich, eine Kombination von je zwei oder mehr Mikrowellenfiltern zu verwenden, um eine verbesserte Abschirmung des Resonators zu erzielen. Dadurch kann die Sicherheit des Druckverfahrens verbessert und zudem die Absorption der Mikrowellenstrahlung durch das Filament maximiert werden. Des Weiteren kann dadurch die Größe der Mikrowellendruckvorrichtung insgesamt verringert werden, weil eine Kammer, die die gesamte Mikrowellendruckvorrichtung abschirmt, nicht nötig ist.

In einem Beispiel werden mindestens zwei Mikrowellenfilter verwendet, wobei mindestens ein Mikrowellenfilter zwischen dem Einlass für das Filament der Mikrowellendruckvorrichtung und dem Resonator angeordnet ist und mindestens ein Mikrowellenfilter zwischen dem Resonator und dem Extrudierelement oder Pultrudierelement bzw. der Druckdüse angeordnet ist. Dabei befinden sich Öffnungen in den mindestens zwei Mikrowellenfiltern, durch die das Filament geleitet werden kann.

In einem anderen Beispiel werden mindestens vier Mikrowellenfilter verwendet, wobei mindestens zwei Mikrowellenfilter zwischen dem Einlass für das Filament der Mikrowellendruckvorrichtung und dem Resonator angeordnet sind und mindestens zwei Mikrowellenfilter zwischen dem Resonator und dem Extrudierelement oder Pultrudierelement bzw. der Druckdüse angeordnet sind.

In einem weiteren Beispiel werden mindestens sechs Mikrowellenfilter verwendet, wobei mindestens drei Mikrowellenfilter zwischen dem Einlass für das Filament der Mikrowellendruckvorrichtung und dem Resonator angeordnet sind und mindestens drei Mikrowellenfilter zwischen dem Resonator und dem Extrudierelement oder Pultrudierelement bzw. der Druckdüse angeordnet sind.

Die Mikrowellendruckvorrichtung kann mehrere Bereiche mit unterschiedlichen Temperaturen und/oder eine Mehrzahl von Resonatoren (z.B. eine Mehrzahl von Koaxialresonatoren) umfassen. In den unterschiedlichen Resonatoren können z.B. unterschiedliche Temperaturen realisiert werden.

Die Mikrowellendruckvorrichtung kann z.B. einen ersten Resonator, einen zweiten Resonator und einen dritten Resonator umfassen, wobei jeder Resonator einen Außenleiter und einen Innenleiteiter umfasst. Der Außenleiter jedes der Resonatoren bildet einen Hohlraum, in dem der Innenleiter angeordnet ist (vorzugsweise koaxial).

Die Mikrowellendruckvorrichtung kann auch lediglich zwei Resonatoren umfassen, z.B. einen ersten und einen zweiten oder einen ersten und einen dritten Resonator. Die Resonatoren sind Koaxialresonatoren.

Der erste Resonator kann mit dem zweiten Resonator verbunden sein, wobei die Längsachse des ersten Resonators und die Längsachse des zweiten Resonators parallel sind und eine gemeinsame Längsachse bilden. Die Verbindung kann mittels geeigneter Verbindungselemente erfolgen. Die Verbindung kann z.B. eine feste Verbindung sein. Der dritte Resonator kann konzentrisch innerhalb des ersten Resonators gebildet werden, und eine gemeinsame Längsachse mit dem ersten Resonator aufweisen. In einem Beispiel kann der Innenleiter des ersten Resonators den Außenleiter des dritten Resonators bilden.

Der erste Resonator kann z.B. primär zur Kopplung und Verteilung der Mikrowellenenergie zwischen dem zweiten und dem dritten Resonator dienen. Wie oben beschrieben können die in dem zweiten und den dritten Resonator erzielbaren Temperaturen unterschiedlich sein. Zum Beispiel kann die erzielbare Temperatur im dritten Resonator höher als die erzielbare Temperatur im zweiten Resonator und/oder im ersten Resonator sein. Vorzugsweise wird im dritten bzw. im letzten Resonator die Drucktemperatur erreicht.

Andere Anordnungen (wie z.B. umfassend mehr oder weniger als drei Resonatoren) sind ebenfalls möglich.

Die Differenz der Temperaturen in den unterschiedlichen Temperaturzonen (wie z.B. in den unterschiedlichen Resonatoren) kann vom Werkstoff des zu erhitzenden Filaments abhängen. Für Polymermatrixwerkstoffe kann die Differenz der Temperaturen in den unterschiedlichen Temperaturzonen z.B. zwischen 100 °C und 400 °C betragen.

Der Filamenteinlass und der Filamentauslass der Mikrowellendruckvorrichtung sind nicht besonders eingeschränkt. In einem Beispiel kann der Einlass für das Filament zumindest einen Einlass für zumindest eine Faser und einen Einlas für ein Matrixmaterial eines Faserverbundstoffs umfassen. Insbesondere kann der Filamenteinlass ein Element mit Öffnungen für die Fasern und ein weiteres Element für das Matrixmaterial des Faserverbundstoffs umfassen. Ferner können der Filamenteinlass und/oder der Filamentauslass Verbindungselemente oder Verbindungsabschnitte aufweisen, um den Filamenteinlass und/oder den Filamentauslass mit anderen Komponenten (wie z.B. Mikrowellenfilter, Druckdüse, etc.) zu verbinden.

Die Mikrowellendruckvorrichtung kann ferner eine Pultrusionsvorrichtung zum Formen des Filaments umfassen. Die Pultrusionsvorrichtung kann insbesondere ausgebildet sein, die Fasern mit dem Matrixmaterial zusammenzuführen und so ein Filament aus einem Faserverbundwerkstoff zu formen. Die Pultrusionsvorrichtung kann einen Aufbau aufweisen, der ähnlich der Mikrowellendruckvorrichtung ist. Insbesondere kann die Pultrusionsvorrichtung eine Mikrowellenheizvorrichtung mit zumindest einem Resonator umfassen.

Die Pultrusion der Fasern und des Matrixmaterials des Faserverbundwerkstoffs wird vor dem Bereitstellen des Filaments am Einlass der Mikrowellendruckvorrichtung durchgeführt. Dadurch kann ein Filament mit einem hohen Anteil an Fasern und geringer Porosität bereitgestellt werden.

Die Pultrusionsvorrichtung muss nicht notwendigerweise Bestandteil der Mikrowellendruckvorrichtung sein, sondern kann eine separate Vorrichtung sein.

Die Mikrowellendruckvorrichtung kann ferner zumindest eine Filamentfixiereinrichtung zum Fixieren des Filaments im Resonator bzw. an einer bestimmten Position im Resonator umfassen. Die Filamentfixiereinrichtung kann z.B. ausgebildet und angeordnet sein, das Filament in einer zentralen Position (z.B. entlang der Längsachse) des Resonators zu fixieren bzw. fest zu halten. Die Filamentfixiereinrichtung kann z.B. als eine geschlossene oder teilweise offene Röhre ausgebildet werden. Vorzugsweise ist die Filamentfixiereinrichtung zumindest teilweise aus einem Material (z.B. Quarzt) ausgebildet, das transparent für die Mikrowellenstrahlung ist.

Die Mikrowellenstrahlung kann induktiv oder kapazitiv in den Resonator eingekoppelt werden. Die verwendete Mikrowellenstrahlung kann z.B. eine Frequenz in einem Bereich von 300 MHz bis 30 GHz aufweisen. Vorzugsweise weist die Mikrowellenstrahlung eine Frequenz in dem Bereich von 900 MHz bis 6 GHz auf. Die Leistung der verwendeten Mikrowellenstrahlung kann höher als 1 W, vorzugsweise höher als 20 W sein. Die obere Grenze der Leistung der eingesetzten Mikrowellenstrahlung hängt von verschiedenen Faktoren ab, wie z.B. von der Größe und/oder vom Material des zu erhitzenden Filaments, und/oder von der Druckgeschwindigkeit. Abhängig von der Druckgeschwindigkeit und/oder der Stärke des zu druckenden Filaments, und/oder anderen Druckparametern kann die Mikrowellenstrahlung, unabhängig von der Frequenz, im Bereich von wenigen Watt bis hin zu mehreren kW liegen.

Beispielsweise kann zum Erhitzen eines karbonfaserverstärkten Filaments mit einem Durchmesser von 0,5 mm eine Mikrowellenstrahlung mit einer maximalen Leistung von 200 W bei einer Frequenz von 2 GHz bis 6 GHz eingesetzt werden.

Die Mikrowellendruckvorrichtung kann ferner zumindest eine zusätzliche Heizvorrichtung zum Erhitzen des Filaments und insbesondere der Oberfläche des Filaments umfassen. Vorzugsweise verwendet die zusätzliche Heizvorrichtung keine Mikrowellenstrahlung zum Erhitzen des Filaments, sondern basiert auf andere Prinzipien. Die zumindest eine zusätzliche Heizvorrichtung kann z.B. eine elektrische Heizvorrichtung sein, insbesondere eine Widerstandsheizvorrichtung. Durch die Verwendung von mehreren, vorzugsweise unterschiedlichen Heizvorrichtungen kann eine hybride Mikrowellendruckvorrichtung realisiert werden, die eine optimale Heizung des Filaments und insbesondere der Oberfläche des Filaments gewährleistet. Die zusätzliche Heizvorrichtung kann (in Bewegungsrichtung des Filaments) vor oder nach der Mikrowellenheizvorrichtung angeordnet sein. Vorzugsweise ist die zusätzliche Heizvorrichtung nach der Mikrowellenheizvorrichtung angeordnet. Vorzugsweise ist die zusätzliche Heizvorrichtung eingerichtet, die Oberfläche des Filaments in der Druckdüse am Ausgang der Mikrowellendruckvorrichtung zu erhitzen. Wie oben beschrieben wird das Volumen des Filaments in der Mikrowellenheizvorrichtung erwärmt. Durch die kalte Umgebung können jedoch Wärmeverluste durch die Oberfläche des Filaments entstehen. Diese Wärmeverluste können durch die zusätzliche Heizvorrichtung kontrolliert kompensiert werden.

Gemäß einem zweiten Aspekt der vorliegenden Erfindung wird ein System zur additiven Herstellung von Formen (additive Druckvorrichtung) bereitgestellt. Das System umfasst:
eine Mikrowellendruckvorrichtung nach dem ersten Aspekt,
eine Druckplattform, auf die das Filament von der Mikrowellendruckvorrichtung entlang eines Druckpfades gedruckt bzw. abgeschieden bzw. aufgetragen wird;
eine Bewegungsvorrichtung zum Bewegen der Mikrowellendruckvorrichtung und insbesondere der Mikrowellenheizvorrichtung und/oder der Druckplattform relativ zueinander; und
eine Steuerungs- oder Regelungsvorrichtung zum Steuern oder Regeln des Druckprozesses, wie z.B. die Bewegung der Mikrowellendruckvorrichtung und/oder der Druckplattform relativ zueinander, zum Steuern- und/oder Regeln der Druckgeschwindigkeit und/oder der Temperatur und/oder der Ziehgeschwindigkeit des Filaments und/oder der Zufuhrgeschwindigkeit des Filaments und/oder einer Filamentschneideeinrichtung und/oder andere Parameter des Druckprozesses.

Das System kann ferner eine Mikrowellenenergiequelle (Mikrowellenstrahlungsquelle) umfassen. Die Mikrowellenenergiequelle ist nicht besonders eingeschränkt. Die Mikrowellenenergiequelle kann einen Verstärker aufweisen. Die Mikrowellenenergie kann über ein Koaxialkabel oder Wellenleiter auf die Mikrowellendruckvorrichtung übertragen werden.

Die Verbindung zwischen Mikrowellendruckvorrichtung und insbesondere der Mikrowellenheizvorrichtung ist nicht besonders eingeschränkt, solange eine Übertragung der Mikrowellenstrahlung auf die Mikrowellendruckvorrichtung gewährleistet ist. Beispielsweise kann das Mikrowellenerwärmungselement über einen 50-Ohm-Adapter und ein flexibles Hochleistungskabel mit einer Mikrowellenenergiequelle verbunden werden. Bevorzugt wird ein Viertelwellenlängen-Widerstandsadapter in der Mikrowellendruckvorrichtung verwendet, um die Reflexion der Mikrowellenstrahlung zu reduzieren.

Ferner kann das System zur additiven Herstellung von Formen eine Datenverarbeitungsvorrichtung umfassen. Die Datenverarbeitungsvorrichtung kann zumindest eines der folgenden Module umfassen: CAD-Modellerzeugungsmodul, Spannungsverteilungsanalysemodul, Druckpfaderzeugungsmodul, Druckpfadsimulationsmodul, Interferenzprüfungsmodul, Gcode-Erzeugungsmodul und Druckprozesssteuerungsmodul.

Die Ausgestaltung des Systems zur additiven Herstellung einer Form ist nicht besonders eingeschränkt. Gemäß einer Ausführungsform basiert die Ausgestaltung auf einer Maschine mit numerischer Steuerung (CNC-Maschine) mit drei Achsen. In einer Ausführungsform bestimmt die Plattform die Position der z-Achse, während die Mikrowellendruckvorrichtung die Position der x- und y-Achse bestimmt. Gemäß einer alternativen Ausführungsform bestimmt die Mikrowellendruckvorrichtung die Position der z-Achse, während sich die Plattform in x- und y-Richtung bewegen kann und so die entsprechende Position der x- und y-Achse bestimmt. Einer weiteren Ausführungsform entsprechend kann ein Roboterarm oder eine fünfachsige CNC-Maschine als Ausgestaltung der additiven Druckvorrichtung verwendet werden.

In einer bevorzugten Ausführungsform kann die Druckplattform erwärmt werden, um eine durch ungleichmäßige Temperaturverteilung verursachte Verformung der gedruckten Teile zu reduzieren.

Das System zur additiven Herstellung einer Form kann weitere Elemente und/oder Module umfassen, wie z.B. Bewegungsaktuatoren, eine Linearführungsspindel, Motoren, einen Gleitblock, einen Fixierblock, etc.

Gemäß einem dritten Aspekt wird ein additives Verfahren zur Herstellung einer Form unter Verwendung von Mikrowellenstrahlung vorgeschlagen. Das Verfahren umfasst die Schritte:
Bereitstellen eines Filaments an einem Einlass einer Mikrowellendruckvorrichtung, wobei die Mikrowellendruckvorrichtung mindestens einen Koaxialresonator umfasst;
Erwärmen des Filaments in dem Koaxialresonator, unter Verwendung von Mikrowellenstrahlung; und
Drucken des erwärmten Filaments, um die Form zu bilden.

Die Mikrowellendruckvorrichtung kann insbesondere eine Mikrowellendruckvorrichtung gemäß dem ersten Aspekt sein. Die obigen Ausführungen in Zusammenhang mit der Mikrowellendruckvorrichtung und dem System zur additiven Herstellung gelten daher auch für das Verfahren gemäß dem dritten Aspekt.

Insbesondere kann das Filament, wie oben beschrieben, ein Filament aus einem Faserverbundwerkstoff sein, der zumindest eine Faser und ein Matrixmaterial umfasst. Beispielsweise kann die zumindest eine Faser des Faserverbundwerkstoffs eine Kohlenstofffaser, Graphitfaser, Metallfaser, Glasfaser, Kunststofffaser, Keramikfaser, Borfaser, Stahlfaser und/oder Steinfaser sein. Die zumindest eine Faser des Faserverbundwerkstoffs kann eine kontinuierliche Faser sein. Es ist auch möglich, mehrere Arten von Fasern zu kombinieren. Das Filament kann elektrisch leitfähig sein und als Innenleiter des Resonators oder als Teil des Innenleiters des Resonators verwendet werden.

Das Verfahren kann Drucken mittels Extrudierens oder Pultrudierens des Filaments und Aufbringens des extrudierten oder pultrudierten Filaments auf einer Druckplatte umfassen. Vor dem Bereitstellen des Filaments an dem Einlass der Mikrowellendruckvorrichtung kann ferner eine Pultrusion durchgeführt werden.

Nachfolgend werden Ausführungsformen der vorliegenden Erfindung anhand begleitender Figuren beispielhaft beschrieben. Einzelelemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigen:
Figur 1: ein beispielhaftes System zur additiven Herstellung von Formen;
Figur 2: eine schematische Darstellung eines Systems zur additiven Herstellung von Formen mit einer beispielhaften Mikrowellendruckvorrichtung;
Figur 3: eine schematische Darstellung einer beispielhaften Mikrowellenheizvorrichtung;
Figur 4: eine schematische Darstellung einer nicht erfindungsgemäßen Druckdüse mit einer Einrichtung zum Schneiden des Filaments;
Figur 5: eine schematische Darstellung einer nicht erfindungsgemäßen Druckdüse mit einer Kühleinrichtung zum Abkühlen des extrudierten Filaments;
Figur 6: ein Flussdiagramm, das ein Beispiel des additiven Herstellungsprozesses veranschaulicht;
Figur 7: ein Flussdiagramm, das ein beispielhaftes Verfahren zum Erstellen bzw.
Generieren eines Druckpfads veranschaulicht;
Figur 8: ein beispielhaftes System zur additiven Herstellung von Formen;
Figur 9a eine schematische Darstellung eines nicht erfindungsgemäßen Systems zur additiven Herstellung von Formen mit einer der Mikrowellendruckvorrichtung vorgeschalteten Imprägniervorrichtung;
Figur 9b: eine schematische Darstellung einer beispielhaften Mikrowellenheizvorrichtung;
Figur 10: beispielhafte Querschnitte eines gedruckten Filaments;
Figur 11: eine schematische Darstellung beispielhafter Druckdüsen;
Figur 12: eine schematische Darstellung einer beispielhaften Mikrowellendruckvorrichtung mit mehreren Resonatoren;
Figur 13: eine schematische Darstellung einer weiteren beispielhaften Mikrowellendruckvorrichtung;
Figur 14: einen beispielhaften Druckpfad für eine rechteckige Form mit einer Öffnung in der Mitte;
Figur 15: die äußere Form einer beispielhaften Mikrowellendruckvorrichtung;

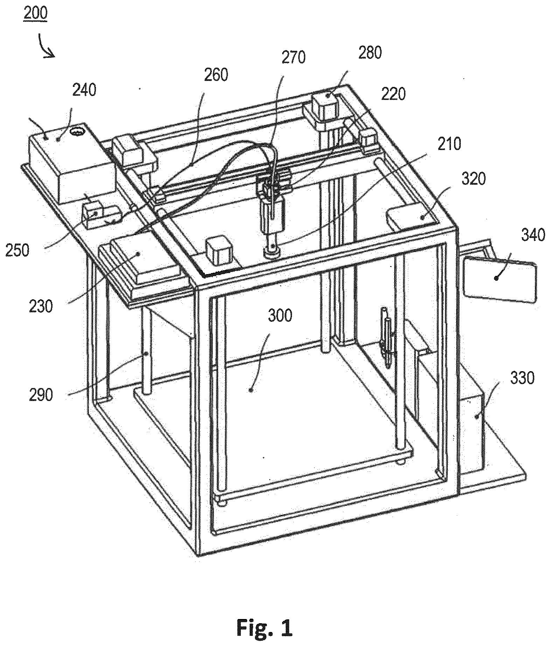

Ein beispielhaftes System 200 zur additiven Herstellung von Formen unter Verwendung von Mikrowellenenergie ist in **Figur 1** gezeigt. In der dargestellten Ausführungsform basiert die Ausgestaltung auf einer drei-achsigen Maschine. Das System umfasst eine Plattform 300 (Druckplattform) und eine Mikrowellendruckvorrichtung 210, welche relativ zur Plattform 300 bewegt werden kann. In dem gezeigten Beispiel bestimmt die Plattform 300 die Position der z-Achse, während die Mikrowellendruckvorrichtung 210 die Position für die x- und y-Achse festlegt. Andere Ausgestaltungen sind ebenfalls möglich. Zum Beispiel kann die Plattform 300 entlang der x- und y-Achsen und die Mikrowellendruckvorrichtung 210 entlang der z-Achse bewegt werden. Es ist auch möglich, einen Roboterarm oder eine 5-achsige CNC Maschine zu verwenden.

Ferner umfasst das System eine Linearführungsspindel 290, Motoren 280, einen Gleitblock 220, einen Fixierblock 320 und eine Bewegungssteuervorrichtung 330, welche die Bewegungsaktuatoren umfasst. Die Linearführungsspindel 290, die Motoren 280, der Gleitblock 220, der Fixierblock 320 können Bestandteile einer Bewegungsvorrichtung zum Bewegen der Mikrowellenheizvorrichtung 210 und/oder der Druckplattform 300 relativ zueinander sein. Die Bewegungssteuervorrichtung 330 kann Bestandteil einer Steuerungs- oder Regelungsvorrichtung zum Steuern oder Regeln des Druckprozesses sein.

Eine Mikrowellenenergiequelle mit Verstärker 230 überträgt die Mikrowellenenergie durch ein flexibles Kabel 270 auf die Mikrowellendruckvorrichtung 210. Das System, umfasst ferner eine Pultrusionsvorrichtung 240, in der die Fasern und das Matrixmaterial für den Faserverbundwerkstoff des Filaments gemischt, erhitzt und mittels einer Vorrichtung 250 herausgezogen werden, um das Filament 260 zu bilden. Anschließend wird das Filament 260 zu der Mikrowellendruckvorrichtung 210 geleitet. Die Vorrichtung 250 kann z.B. ein Getriebe und einen Motor umfassen. Der Druckprozess wird mithilfe einer Steuerungsvorrichtung mit einem Touchscreen 340 überwacht und gesteuert bzw. geregelt.

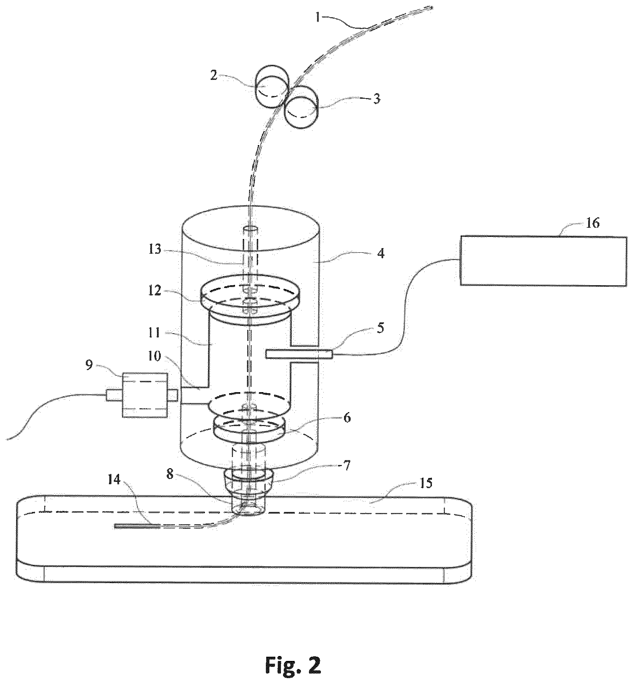

**Figur 2** zeigt ein System zur additiven Herstellung von Formen. Das System umfasst eine Mikrowellendruckvorrichtung mit einer Mikrowellenheizvorrichtung 4. Das zu erwärmende Material wird einer Vorrichtung zum Erwärmen bzw. Aufheizen von Material mittels Mikrowellenstrahlung (Mikrowellenheizvorrichtung) in Form eines kontinuierlichen Filaments 1 zugeführt. Wie oben beschrieben kann das kontinuierliche Filament 1 aus einem Faserverbundwerkstoff bestehen. Der Faserverbundwerkstoff kann aus in einem Matrixmaterial (wie z.B. Harz, Kunststoff oder Polymer) eingebetteten Fasern bestehen. Der Faserverbundwerkstoff kann z.B. ein kontinuierlicher kohlenstofffaserverstärkter (carbonfaserverstärkter Kunststoff bzw. CFK) sein. Mittels einer Filamentvorschubeinrichtung wird das Filament 1 kontinuierlich in Richtung der Mikrowellenheizvorrichtung 4 und einer Düse 8 (Druckdüse) befördert. Die Druckdüse kann eine Extrudierdüse oder eine Pultrudierdüse sein. Die Filamentvorschubeinrichtung kann zum Beispiel zwei rotierende Rollen 2 und 3 umfassen, welche das zwischen den Rollen verlaufende Filament 1 ziehen und es in die Mikrowellenheizvorrichtung 4 befördern. Die Rotationsgeschwindigkeit der Rollen 2 und 3 entspricht im Wesentlichen der Druckgeschwindigkeit. Die Rotationsgeschwindigkeit der Rollen 2 und 3 kann einstellbar sein, um diese an unterschiedliche Druckgeschwindigkeiten anzupassen. Die Mikrowellenheizvorrichtung 4 ist ausgelegt, Mikrowellenenergie in thermische Energie umzuwandeln, um das Filament 1 bei dessen Durchgang durch die Mikrowellenheizvorrichtung 4 zu erwärmen. Die Mikrowellenheizvorrichtung 4 umfasst einen Resonator mit einem Außenleiter, welcher einen im Wesentlichen geschlossenen Hohlraum 11 (Mikrowellenhohlraum) bildet (Hohlraumresonator). Bei einem elektrisch leitfähigen Filament ist der Resonator erfindungsgemäß ein Koaxialresonator. Der Außenleiter bzw. der Hohlraum 11 weist dabei eine zylindrische Form auf, mit einer Länge von λ/4 (z.B. 30,6 mm für f = 2,45 GHz) bis λ (z.B. 122,4 mm für f = 2,45 GHz), wobei λ die Wellenläge und f die Frequenz der Mikrowellenstrahlung ist. Der Durchmesser des Außenleiters bzw. der Hohlraum 11 kann geeignet gewählt werden. Für ein Filament mit einem Durchmesser von ungefähr 8 mm kann der Durchmesser des Außenleiters bzw. der Hohlraum 11 z.B. zwischen 15 mm und 50 mm liegen. Das Filament 1 wird (vorzugsweise mittig) durch den Resonator befördert bzw. bewegt. Das Filament 1 erstreckt sich somit entlang der Längsachse bzw. der Symmetrieachse des Resonators.

Der Resonator bzw. der Hohlraum 11 weist einen Einlass für das Filament (Filamenteinlass), in den das kontinuierliche Filament eingeführt wird, und einen Auslass für das Filament (Filamentauslass) aus dem das Filament austritt auf. Der Filamenteinlass und der Filamentauslass können z.B. als Öffnungen in dem Außenleiter, der den Hohlraum 11 bildet, ausgebildet werden. Die Öffnungen können z.B. in den zwei gegenüberliegenden Seitenwänden (Stirnwänden) des zylindrischen Außenleiters ausgebildet werden. Der Durchmesser der jeweiligen Öffnung kann etwas größer als der Durchmesser des Filaments sein. Für ein Filament mit einem Durchmesser von ungefähr 8 mm kann der Durchmesser der jeweiligen Öffnung z.B. ungefähr 10 mm sein. Vorzugsweise ist das zu erwärmende Material des Filaments 1 leitfähig und bildet somit einen Innenleiter des Resonators.

Die von einem Mikrowellengenerator (nicht gezeigt) generierte Mikrowellenenergie wird mittels einer Mikrowellenantenne 5 in den Resonator bzw. in den Hohlraum 11 eingekoppelt. Die Mikrowellenantenne 5 kann z.B. durch eine dafür vorgesehene Öffnung in der Mantelfläche des zylindrischen Außenleiters in den Hohlraum 11 eingeführt werden. Eine Steuer- und/oder Regelvorrichtung 16 steuert und/oder regelt zumindest einen Parameter des Druckvorgangs, wie z.B. die in den Hohlraum eingekoppelte Mikrowellenenergie bzw. -strahlung, die Beförderungsgeschwindigkeit des Filaments, etc.

Die Mikrowellendruckvorrichtung 4 umfasst ferner zwei Mikrowellenfilter 6 und 12, die ausgebildet und angeordnet sind, Mikrowellenstrahlung, die aus dem Resonator bzw. dem Hohlraum 11 austritt, zu absorbieren. Die Mikrowellenfilter 6 und 12 können z.B. λ/4 Fallen sein, wobei die Filterwirkung durch die Geometrie der elektrisch leitenden Wand definiert ist. Vorzugsweise ist der Hohlraum mit Keramik oder einem anderen geeigneten Dielektrikum mit hoher Dielektrizitätskonstante gefüllt. Dadurch kann die Größe der Filter reduziert werden, da die Wellenläge λ im Dielektrikum entsprechend klein ist. Bei dem gezeigten Beispiel ist ein erster Mikrowellenfilter 12 an dem Filamenteinlass des Resonators oder in dessen Nähe angeordnet. Ein zweiter Mikrowellenfilter 6 ist an dem Filamentauslass des Resonators oder in dessen Nähe angeordnet. Die Mikrowellenfilter 6 und 12 weisen entsprechende Öffnungen auf, durch die das Filament hindurchtritt. Die Mikrowellenfilter können direkt oder indirekt (d.h. mittels anderer Elemente) mit dem Resonator verbunden sein.

Die Mikrowellendruckvorrichtung kann ferner ein Gehäuse aufweisen, das den Hohlraum 11 und die Mikrowellenfilter 6 und 12 umschließt. Das Gehäuse weist einen Filamenteinlass sowie einen Filamentauslass auf, durch welchen das kontinuierliche Filament kontinuierlich befördert wird, und welche entsprechend dem Filamenteinlass und dem Filamentauslass des Resonators bzw. des Hohlraums 11 angeordnet sind. Der Filamenteinlass und der Filamentauslass können z.B. als Öffnungen in dem Gehäuse der Mikrowellenheizvorrichtung ausgebildet werden.

Der Filamentauslass des Gehäuses weist einen Abschnitt bzw. einen Anschluss zum Anschließen einer Druckdüse 8 auf. Die Druckdüse 8 kann Bestandteil eines Extrudierelements oder eines Pultrusionselements sein. Mittels der Druckdüse 8 wird das erwärmte Filament extrudiert oder pultrudiert. Das extrudierte oder pultrudierte Filament 14 kann eine beliebige, durch die Druckdüse 8 vorgegebene Querschnittsform aufweisen.

Ein kleiner Teil der Mikrowellenenergie kann in die Druckdüse 33 eintreten bzw. in diese eingekoppelt werden. Die in die Druckdüse 33 eintretende bzw. gekoppelte Mikrowellenstrahlung bzw. Mikrowellenenergie kann mit dem Mikrowellenfilter 6 eingestellt werden. Wenn z.B. eine stärkere Mikrowellenstrahlung bzw. höhere Mikrowellenenergie erforderlich ist (z.B. über 5 mW/cm²), kann ein Mikrowellenfilter mit einem niedrigen Gütefaktor verwendet werden. Soll die eintretende Mikrowellenstrahlung bzw. Mikrowellenenergie schwach bzw. niedrig sein, kann ein Mikrowellenfilter mit einem höheren Gütefaktor verwendet werden. Der Mikrowellenfilter 6 kann zwischen dem Filamentauslass des Resonators oder Gehäuses und der Druckdüse 8 angeordnet werden.

Die Mikrowellendruckvorrichtung 4 kann ferner eine Schneideeinrichtung 7 zum Durchschneiden des Filaments 1 (Filamentschneideeinrichtung) aufweisen. Die Filamentschneideeinrichtung 7 kann mindestens eine Schneide umfassen, die integral mit der Druckdüse 8 ausgebildet werden kann. Es ist auch möglich, eine von der Druckdüse separate Filamentschneideeinrichtung 7 einzusetzen. Die Filamentschneideeinrichtung 7 ist in Form einer Schneide gebildet, die ringförmig um die Druckdüse 8 angeordnet ist.

Der Prozess der Erwärmung des Filaments 1 erfolgt im Hohlraum 11 des Resonators während der Bewegung des Filaments 1 durch den Resonator hindurch. Die Temperatur des erwärmten Filaments 1 kann durch eine dafür vorgesehene Öffnung 10 in dem Außenleiter bzw. dem Hohlraum 11 mittels eines kontaktlosen Temperatursensors 9 gemessen werden. Das von dem Temperatursensor 9 erfasste Signal kann der Steuer- und/oder Regelvorrichtung 16 zugeführt werden. Die Steuer- und/oder Regelvorrichtung 16 kann anhand der gemessenen Temperatur zumindest einen Parameter des Druckvorgangs (wie z.-B. Druckgeschwindigkeit, Intensität der Mikrowellenstrahlung, etc.) steuern und/oder regeln. Bei seinem Durchgang durch die Mikrowellenheizvorrichtung 4 wird das Filament 1 kontrolliert erwärmt, gegebenenfalls mittels der Druckdüse 8 geformt und anschließend auf der Druckfläche 15 kontinuierlich und kontrolliert aufgebracht bzw. abgeschieden. Das auf der Druckfläche 15 aufgebrachte Filament 14 kühlt in der Regel rasch ab und haftet an der Druckfläche 15 an.

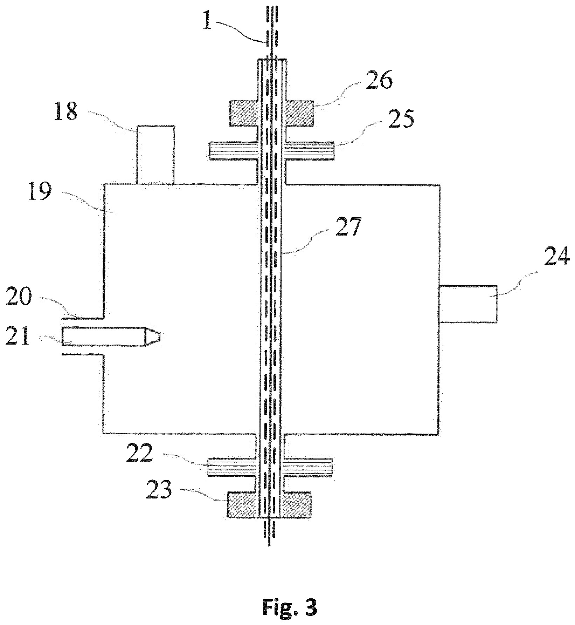

**Figur 3** zeigt eine beispielhafte Mikrowellenheizvorrichtung. Die Mikrowellenheizvorrichtung umfasst einen Koaxialresonator, mit einem Außenleiter 20, welcher einen Hohlraum 19 bildet. Eine nicht metallische Röhre 27, welche das Filament teilweise oder vollständig umschließt, geht durch den Hohlraum 19 hindurch. Die Röhre 27 kann z.B. eine Röhre aus Keramik oder aus Quarz sein. Die Röhre 27 ist vorzugsweise transparent für die verwendete Mikrowellenstrahlung. Die Röhre 27 kann zum Ausrichten und/oder Stützen des Filaments dienen. Alternativ oder zusätzlich kann die Röhre als Wärmeisolator dienen. Die Mikrowellenheizvorrichtung kann ferner eine zusätzliche Heizvorrichtung, wie z.B. eine elektrische Heizvorrichtung, umfassen. Die zusätzliche Heizvorrichtung kann die Oberflächentemperatur des Filaments 1 zusätzlich erhöhen, um den Druckprozess zu verbessern. Die zusätzliche Heizvorrichtung kann z.B. in einem Abschnitt der Röhre 27 angeordnet bzw. ausgebildet sein, der sich außerhalb des Hohlraums 19 befindet. Die Mikrowellenenergie wird durch einen koaxialen Koppelstift 21, eine Koppelschleife oder alternativ durch einen Wellenleiter 18 und 24 in den Resonator eingekoppelt.

An dem Filamenteinlass oder in dessen Nähe sind zwei Mikrowellenfilter 25 und 26 angeordnet. An dem Filamentauslass oder in dessen Nähe sind ebenfalls zwei Mikrowellenfilter 22 und 23 angeordnet. Es ist auch möglich, mehr als zwei Mikrowellenfilter einzusetzen. Die zwei oder mehr Mikrowellenfilter 22 und 23 bzw. 25 und 26 können unterschiedliche Filtercharakteristika aufweisen, wodurch eine verbesserte und effiziente Mikrowellenabschirmung bei sich ändernden Prozessparameter erreicht werden kann.

Die Richtung des elektrischen Felds im Resonator bzw. im Hohlraum 19 kann unterschiedlich und zum Beispiel orthogonal oder parallel zum Filament 1 sein. Die Richtung des elektrischen Felds kann in Abhängigkeit von den Mikrowelleneigenschaften des zu erwärmenden Filaments (elektrisch leitend oder dielektrisch) durch die Wahl eines geeigneten Resonatordesigns mit entsprechender Feldverteilung gewählt bzw. eingestellt werden. Weist das Material des Filaments ein niedriges Mikrowellenabsorptionsvermögen auf wird vorzugsweise die Orientierung des elektrischen Feldes parallel zum Filament 1 gewählt. Weist das Material ein höheres Mikrowellenabsorptionsvermögen auf, insbesondere wenn die verwendeten Fasern elektrisch leitend sind, wird vorzugsweise die Richtung des Feldes senkrecht zum Filament 1 gewählt. Da sich das Filament 1 durch den Resonator bzw. den Hohlraum kontinuierlich bewegt, wird es, abhängig vom Resonatordesign, eine Mehrzahl von Feld-Minima und -Maxima durchlaufen, und sich somit im zeitlichen Mittel gleichmäßig erwärmen. Aus dem Resonator kann gegebenenfalls Mikrowellenstrahlung austreten, die in der Regel relativ schwach ist.

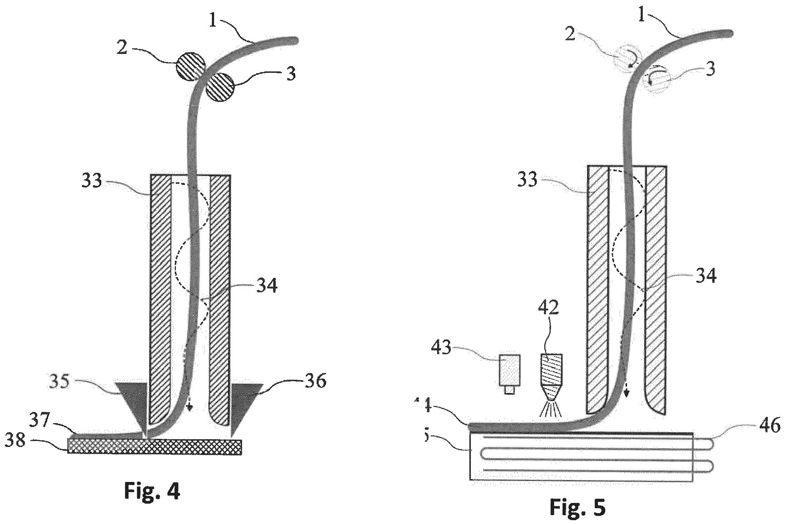

**Figur 4** zeigt schematisch eine nicht erfindungsgemäße Druckdüse 33 mit einer Einrichtung zum Schneiden des Filaments (Filamentschneideeinrichtung). Bei der in Fig. 4 gezeigten Druckdüse 33 besteht die Filamentschneideeinrichtung ausden Schneiden 35 und 36, welche links und rechts um den Auslass der Druckdüse angeordnet sind. Die Schneiden 35 und 36 können z.B. aus Metall oder Keramik sein und können scharfe Schneidekanten aufweisen. Die Schneiden 35 und 36 können gekrümmt sein. Die Filamentschneideeinrichtung kann auch aus einer einzigen Schneide bestehen, welche ringförmig um den gesamten Umfang des Auslasses der Druckdüse 33 (d.h. um 360 Grad) angeordnet sein kann. Es ist auch möglich, die Schneide nicht um den gesamten Umfang des Auslasses der Druckdüse, sondern nur abschnittsweise (d.h. um weniger als 360 Grad) anzuordnen.

Das kontinuierliche Filament 37 wird mittels der Rollen 2 und 3 in den Hohlraum der Mikrowellenheizvorrichtung befördert und dort erwärmt. Bei einem kompositen Material aus Faserverbundwerkstoff wird das kontinuierliche Filament 37 auf eine Temperatur erwärmt, die die der Gelier- oder Reaktionstemperatur des Harzes entspricht bzw. höher ist als die Schmelztemperatur des Thermoplasts. Das erwärmte Filament wird in die Druckdüse 33 befördert und mittels der Druckdüse 33 auf die Druckfläche 38 extrudiert. Wird während des Druckvorgangs ein Schneidebefehl von einer Steuer- und/oder Regelvorrichtung erlassen, werden zunächst die Rollen 2 und 3 gestoppt und die Position des Filaments 37 fixiert. Anschließend wird die linke Schneide 35 oder, im Fall einer einzigen Schneide, die linke Seite der Scheide in Kontakt mit dem extrudierten Filament 37 gebracht, um dieses durchzuschneiden. Bei dem in Fig. 4 gezeigten Beispiel schneidet die linke Schneide 35 oder die linke Seite der Schneide das Filament 37 durch. Es ist jedoch möglich, eine andere Schneide (wie Scheide 36) bzw. eine andere Seite der Schneide in Kontakt mit dem extrudierten Filament 37 zu bringen und dieses durchzuschneiden.

Es ist ferner möglich, die Druckdüse 33 mit einem glatten Auslass auszubilden. Der Auslass der Druckdüse kann ferner eine relativ große kreis- bzw. ringförmige Abschrägung bzw. Fase (Chamfer) aufweisen. Der Durchmesser der Abschrägung kann zwei bis drei Mal größer als der Durchmesser des Filaments sein. Die Abschrägung kann eine glatte, dünne Beschichtung, z.B. eine PTFE (Polytetrafluorethen) Beschichtung aufweisen. Die Druckdüse 33 kann ferner einen im wesentlichen flachen Abschnitt auf der Außenseite der Düsenfläche aufweisen, welcher der Druckfläche 38 gegenüber angeordnet ist. Der flache Abschnitt kann zum Beispiel die kreis- bzw. ringförmigen Abschrägung kontaktieren bzw. mit dieser verbunden sein. Der flache Abschnitt kann insbesondere die Verlängerung der Tangente der kreis- bzw. ringförmigen Abschrägung sein. Der flache Abschnitt kann eine Kompressionskraft auf das Filament ausüben, um das Filament zu verdichten.

Um den Druckvorgang zu beschleunigen, kann eine Filamentkühleinrichtung 42 zum Abkühlen des aus der Druckdüse austretenden, insbesondere pultrudierten Filaments vorgesehen werden, wie in **Figur 5** gezeigt. Im Vergleich zur herkömmlichen thermisch unterstützten additiven Fertigung, weist die Mikrowellendruckvorrichtung bzw. die Vorrichtung zur additiven Fertigung mittels Mikrowellenheizen gemäß Aspekten der Erfindung eine wesentlich genauere Steuerung und/oder Regelung der Temperatur des Filaments auf. So kann mit Hilfe der Mikrowellenheizvorrichtung ein komposites Filament aus T300 1K kohlenstofffaserverstärktem Polylactid auf eine Temperatur von bis 250 Grad Celsius aufgewärmt werden. Bei einer sehr hohen Druckgeschwindigkeit kann es vorkommen, dass das kontinuierliche Filament nicht schnell genug abkühlt und somit insbesondere bei einem Drucken mittels Pultrusion nicht ausreichend an der Druckfläche anhaftet. Wenn das aufgetragene Filament nicht ausreichend fest mit dem gedruckten Bauteil verbunden ist, kann die Pultrusion schwierig sein, da das Filament möglicherweise wieder vom Bauteil bzw. vom gewünschten Auftragsort weggezogen wird. Um das bereits gedruckte Filament abzukühlen, kann eine geeignete Filamentkühleinrichtung 42 eingesetzt werden. Das pultrudierte oder extrudierte Filament 44 kann z.B. mittels eines gekühlten Fluidstroms (z.B. Gasstroms) oder durch Verdampfen von flüssigem Gas erfolgen. Alternativ oder zusätzlich kann die Druckplatte 45 einen oder mehrere Wärmetauscher bzw. Wärmetransfervorrichtungen 46 aufweisen. Der Wärmetransfer kann z.B. fluid- oder halbleiterbasiert sein.

Die Temperatur des extrudierten Filaments kann mittels eines Thermosensors 43 gemessen werden.

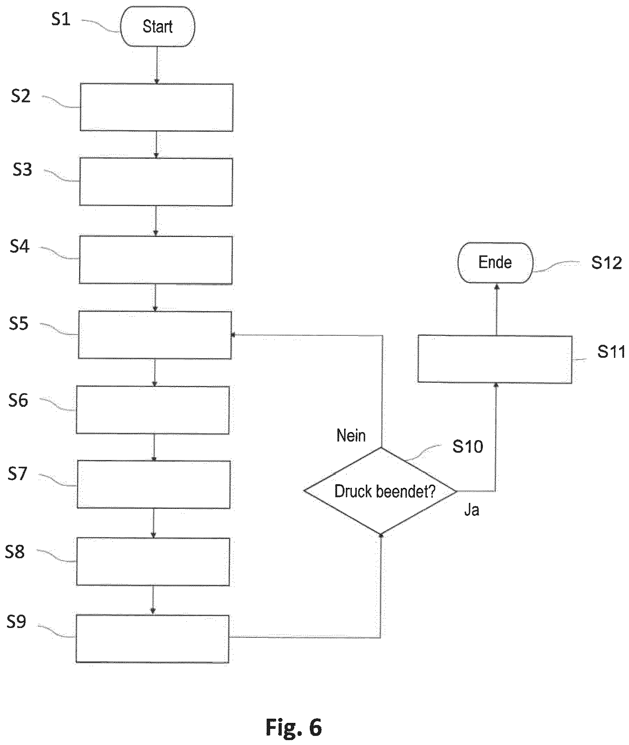

**Figur 6** zeigt ein Flussdiagramm, das einen beispielhaften additiven Herstellungsprozess mit Hilfe der oben beschriebenen additiven Druckvorrichtungen und Systeme veranschaulicht. Das Filament kann z.B. aus einem faserverstärkten Polymerverbundwerkstoff sein. Für die herzustellende Form wird zunächst ein CAD-Modell erstellt. Auf Basis des CAD-Modells wird ein Druckpfad für den Mikrowellendruck generiert (Schritt S2).

Das System zur additiven Fertigung von Formen (additive Druckvorrichtung) wird initialisiert und die Mikrowellenenergiequelle eingeschaltet (Schritt S3). Die Initialisierung kann eine Koordinatenkalibrierung umfassen, bei der alle Achsen der additiven Druckvorrichtung auf den Ausgangspunkt gefahren werden. Die Initialisierung kann ferner eine Überprüfung umfassen, ob alle Zustände und Parameter richtig eingestellt sind. Anschließend wird die Erwärmung des Filaments gestartet (Schritt S4). Dabei wird bei zunehmender Erhöhung der Mikrowellenenergie die Temperaturschwankung des Filaments überwacht, vorzugsweise in Echtzeit. Nachdem die Temperatur des Filaments die Zieltemperatur erreicht hat (Schritt S5), wird das Drucken entsprechend dem Druckpfad begonnen. Dabei wird der heißeste Punkt des Filaments in die Druckdüse angedrückt (Schritt S6). Wenn sich der heißeste Punkt des Filaments in der Druckdüse befindet, wird die Position des Filaments beibehalten. Im nächsten Schritt wird das extrudierte Filament auf die Druckfläche bzw. Druckplatte angebracht und gegebenenfalls eingedrückt oder komprimiert (Schritt S7). Der Prozess des Druckens des Filaments wird entlang des Druckpfades fortgesetzt (Schritt S8). Falls erforderlich, wird das Filament durchgeschnitten (Schritt S9). Nach dem Durchschneiden des Filaments erfolgt eine Überprüfung, ob der Druckvorgang beendet ist (Schritt S10). Wenn der Druckvorgang noch nicht beendet ist, werden die Schritte S5 bis S9 wiederholt. Wenn der Druckvorgang beendet ist, werden die Mikrowellendruckvorrichtung und die Mikrowellenquelle ausgeschaltet (Schritt S11) und der Druckvorgang beendet (Schritt S12).

Vorzugsweise werden der Druckzustand und unterschiedliche Parameter des Druckvorgangs in Echtzeit überwacht. Beim Vorliegen einer Warnung werden die Mikrowellenenergiequelle und die Mikrowellendruckvorrichtung sofort abgeschaltet, so dass eine Beschädigung des Systems oder der Ausfall des Herstellungsprozesses vermieden werden können. Wenn keine Warnung erfolgt, wird der Druckvorgang entlang des Druckpfades zu Ende geführt und schließlich der Herstellungsprozess beendet.

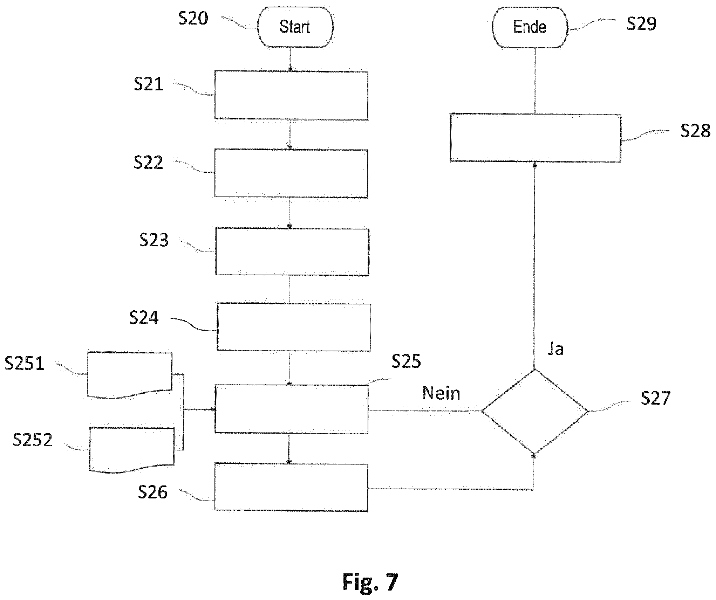

**Figur 7** zeigt ein Flussdiagramm, das ein beispielhaftes Verfahren zum Erstellen bzw. Generieren des Druckpfads, z.B. für ein Filament aus einem faserverstärkten Polymerverbundwerkstoff, veranschaulicht. Nach dem Start des Verfahrens zum Erstellen des Druckpfads (Schritt S20) wird zunächst ein CAD-Modell für die herzustellende Form bereitgestellt (Schritt S21). Das CAD-Modell kann z.B. anhand von Designvorgaben generiert oder aus einer Datenbank mit fertigen Modellen erhalten werden. Das CAD-Modell enthält z.B. Dimensionsparameter, Materialeigenschaften, Kräfte, Lasten und/oder Spannungseinschränkungen und gegebenenfalls andere Parameter und Randbedingungen. In einem nächsten Schritt (Schritt S22) wird das Material des Filaments erfasst oder vorgegeben. Bei einem Filament aus einem faserverstärkten Polymer wird das Material der Faser und das Material des Polymers erfasst oder vorgegeben. Im nächsten Schritt werden die Vorgaben für die Lasten bzw. die einwirkenden Kräfte festgelegt (Schritt S23). Ferner können weitere Designvorgaben und Randbedingungen festgelegt werden (Schritt S24).

Diese Parameter werden an ein Druckpfadberechnungsmodul zum Berechnen eines Druckpfads für die herzustellende Form und/oder an ein Spannungsverteilungsanalysemodul weitergegeben, um die Spannungsrichtung und die Spannungsgrößen in der entworfenen Form zu berechnen.

Im nächsten Schritt wird der Druckpfad generiert bzw. berechnet (Schritt S25). Der Druckpfad kann mit mehreren Schichten oder ohne Schichten (z.B. eine 3D Volumenstruktur) generiert werden (Schritt S251). Es ist auch möglich, eine Mischung aus den beiden Arten zu realisieren. Ferner kann das Volumen und/oder die Menge der Faser vorgegeben bzw. festgelegt werden (Schritt S252). Auf Basis des generierten Druckpfads kann die herzustellende Form oder Teile davon simuliert werden. Ferner kann eine Analyse der Spannung (dem Betrag und der Richtung nach) und/oder der einwirkenden Kräfte und/oder der Materialstärke durchgeführt werden (Schritt S26). In einem nächsten Schritt kann überprüft werden, ob die Designvorgaben (z.B. die Designvorgaben für die Spannungen bzw. Kräfte) eingehalten werden (Schritt S27). Ferner kann überprüft werden, ob Fehler und Interferenzen vorliegen. Wenn die Designvorgaben nicht erfüllt sind und/oder Fehler und Interferenzen vorliegen, wird ein neuer Druckpfad berechnet bzw. werden die Schritte S25 bis S27 erneut durchgeführt. Wenn alle Designvorgaben erfüllt sind und/oder keine Fehler und Interferenzen vorliegen, werden weitere Steuerungsparameter zum Steuern und/oder Regel des Druckprozesses festgelegt oder addiert und ein entsprechender GCode generiert (Schritt S28). Die Druckprozesssteuerung umfasst hauptsächlich die Mikrowellensteuerung, die Bewegungssteuerung, das Faserschneiden, das Überwachen des Prozesses und gegebenenfalls das Anpassen des Prozesses. Die Steuerungsparameter können z.B. die Druckgeschwindigkeit, Temperatur, Verfahrweg des Druckkopfes, Präzisionskompensation, etc. umfassen. Das Verfahren zum Erstellen bzw. Generieren des Druckpfads wird im Schritt S32 beendet.

Die Berechnung des Druckpfads (z.B. in einem Druckpfadberechnungsmodul) kann iterativ erfolgen. So kann die vektorielle Verteilung der Spannung bzw. der einwirkenden Kräfte in der herzustellenden Form zunächst anhand einer homogenen Verteilung des Materials ermittelt werden. Auf Basis der ermittelten Spannungs- bzw. Kräfteverteilung kann eine Filamentausrichtung festgelegt bzw. vorgegeben werden. Dann werden die Daten an das Druckpfaderzeugungsmodul weitergegeben, um den Druckpfad zu generieren. Der berechnete Druckpfad entspricht einer abgeänderten anisotropen Materialverteilung. Auf Basis dieser anisotropen Materialverteilung wird die vektorielle Verteilung der Spannung bzw. der einwirkenden Kräfte in der herzustellenden Form neu berechnet, die Filamentorientierung neu festgelegt und der Druckpfad neu berechnet. Dieser Prozess kann mehrmals wiederholt werden.

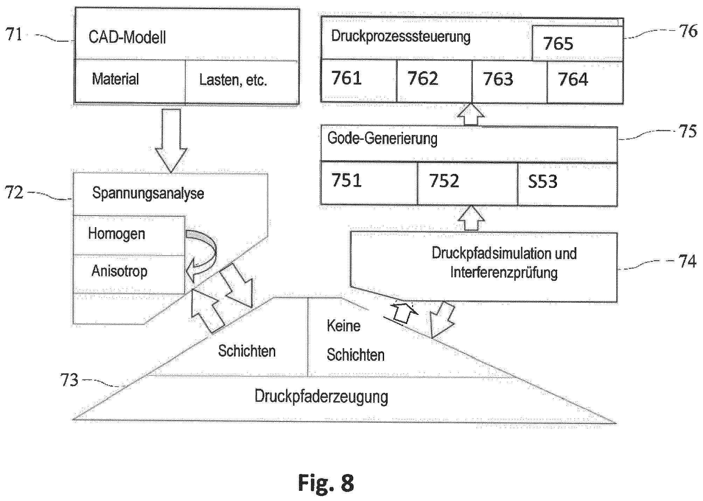

**Figur 8** zeigt ein beispielhaftes System zur additiven Herstellung von Formen. Das System umfasst ein CAD-Modul 71 zur Vorgabe bzw. Erzeugung eines CAD-Modells, ein Spannungsverteilungsanalysemodul 72, ein Druckpfaderzeugungsmodul, ein Simulationsmodul zur Druckpfadsimulation und Interferenzprüfung, ein Gcode-Erzeugungsmodul 75 und ein Druckprozesssteuerungsmodul 76. Das CAD-Modell enthält die Dimensionsparameter der zu druckenden Form, Materialeigenschaften, Lasten, Einschränkungen und gegebenenfalls weitere Designparameter. Diese Parameter werden an das Spannungsverteilungsanalysemodul 72 weitergegeben, um die Spannungsrichtungen und die Spannungsbeträge in der entworfenen Form zu berechnen. Zuerst wird eine homogene Materialverteilung vorgegeben und anschließend ein Modell auf der Basis der Belastungsvektoren in verschiedenen Bereichen angewandt, um die Filamentausrichtung vorzugeben. Dann werden die Daten zum Druckpfaderzeugungsmodul 73 übertragen, um den Druckpfad zu generieren. Danach erfolgt eine Neuberechnung im Spannungsverteilungsanalysemodul und eine Überprüfung der Spannungsverteilung.

Das Druckpfaderzeugungsmodul 73 kann einen Pfad mit verschiedenen Schichten oder ohne Schichten (z.B. in Form einer Raumstruktur bzw. volumetrisch) oder eine Mischung von beiden erzeugen. Der nächste Schritt ist eine virtuelle Simulation des Druckpfades in dem Simulationsmodul 74, um Fehler und Interferenzen zu überprüfen. Dann wird in dem Gcode-Erzeugungsmodul 75 eine Gcode-Datei generiert. Die GCode Datei kann z.B. den Bewegungspfad (751), die Druckgeschwindigkeit (752) und die Präzisionskompensation (751) umfassen. Das System umfasst ferner ein Druckprozesssteuerungsmodul 76. Die Druckprozesssteuerung umfasst hauptsächlich die Mikrowellensteuerung (761), die Bewegungssteuerung (762), die Steuerung des Faserschneidens (763), das Überwachen und gegebenenfalls Anpassen des Druckprozesses (764) und Alarmerzeugen und -bearbeiten (765).

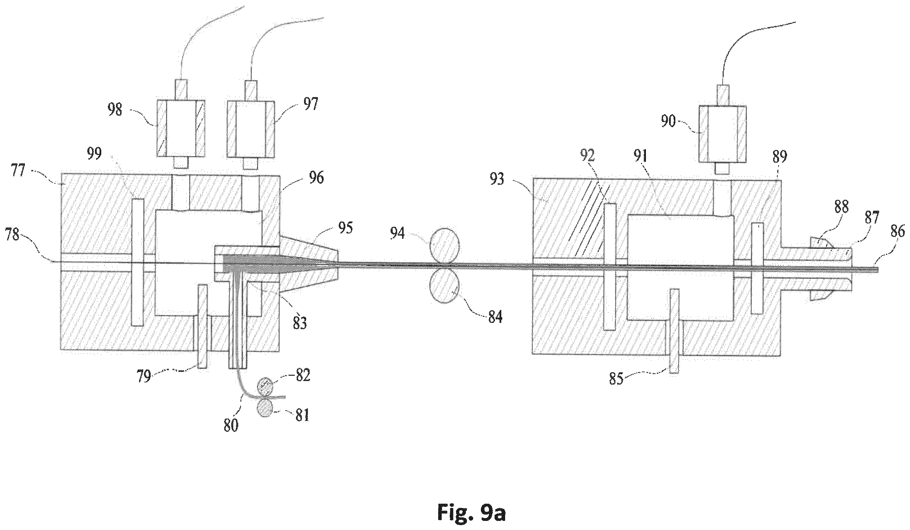

**Figur 9a** zeigt schematisch ein beispielhaftes System zur additiven Herstellung von Formen mit einer der Mikrowellendruckvorrichtung vorgeschalteten Imprägniervorrichtung 77. Eine kontinuierliche Faser (z.B. eine Karbonfaser) 78 wird in die Imprägniervorrichtung 77 eingeführt. Die Imprägniervorrichtung 77 umfasst eine Mikrowellenheizvorrichtung mit einer Mikrowellenresonanzkammer 96. Die Mikrowellenheizvorrichtung kann ähnlich wie die zuvor beschriebene Mikrowellenheizvorrichtung ausgebildet sein. Vor dem Einlass der Faser in die Mikrowellenresonanzkammer 96 ist ein Mikrowellenfilter 99 mit einer Öffnung für die Faser angeordnet. Die Mikrowellenenergie wird durch einen Koppelstift bzw. Antenne 79 in die Mikrowellenresonanzkammer 96 eingekoppelt. Die Faser wird mittels eines Verbinders, wie z.B. eines T-Verbinders 83, mit einem Imprägnierungsmaterial (z.B. aus Polymer) zusammengeführt und erhitzt. Um eine vom hohen elektrischen Feld induzierte Lichtbogenentladung (Arc) zwischen den Karbonfasern zu vermeiden, können dem Imprägnierungsmaterial Schlichten oder andere Isolationsmittel beigemischt werden.

Das Imprägnierungsmaterial 80 (z.B. Polymermaterial) wird mittels der Rollen 81 und 82 zu dem offenen Einlass des T-Verbinders 83 befördert. In einem Beispiel kann der T-Verbinder 83 z.B. aus Siliziumkarbid sein und die Mikrowellenergie absorbieren. Durch die Absorption der Mikrowellenenergie erhitzt sich der T-Verbinder 83. Das Polymermaterial 80 schmilzt beim Kontakt mit dem erhitzten Bereich des T-Verbinders 83 und benetzt die Faser. In einem anderen Beispiel kann der T-Verbinder 83 (z.B. aus Keramik) transparent für die Mikrowellenstrahlung sein. Das sich im T-Verbinder 83 befindliche Polymer kann die Mikrowellenenergie absorbieren und sich erhitzen bis z.B. die Schmelztemperatur des Polymers erreicht ist.

Die Temperatur der Faser und des T-Verbinders wird mittels Temperatursensoren 98 und 97 gemessen. Die imprägnierte Faser kann mittels einer Pultrisionsdüse extrudiert werden, um ein prä-imprägniertes Filament zu formen. Mittels der Pultrusionsdüse 95 kann dem prä-imprägnieren Filament eine bestimmte Form und/oder ein bestimmtes Faservolumen der imprägnierten Faser verliehen bzw. vorgegeben werden. Die Pultrusionsdüse 95 kann aus einem Material geformt werden, das stark absorbierend für die Mikrowellenstrahlung ist. Dadurch kann einerseits die Temperatur erhöht werden und andererseits das Austreten von Mikrowellenstrahlung aus der Imprägniervorrichtung reduziert oder verhindert werden. Mittels der Rollen 84 und 94 kann das Filament aus der Pultrusionsdüse 95 gezogen und in die Mikrowellendruckvorrichtung 93 befördert werden.

In einigen Beispielen kann die Imprägniervorrichtung 77 nicht nur zum Imprägnieren, sondern ebenfalls zum Drucken eingesetzt werden.

Die Mikrowellendruckvorrichtung 93 kann eine der zuvor beschriebenen Mikrowellendruckvorrichtungen sein. Die in Figur 9a gezeigte Mikrowellendruckvorrichtung 93 umfasst eine Resonanzkammer 91, zwei Mikrowellenfilter 89 und 92, eine Mikrowellenantenne zum Einkoppeln von Mikrowellenenergie in die Resonanzkammer 91 und einen Temperatursensor 90 zum Messen der Temperatur des Filaments. Es ist ferner möglich, die Verteilung der Temperatur des Filaments zu messen, z.B. mittels mehrerer Punktsensoren oder mittels einer Infrarotkamera. Wenn mehrere Punktsensoren verwendet werden, ist es vorteilhaft, den heißesten Punkt aufzufinden und dessen Temperatur kontinuierlich zu messen bzw. zu überwachen. Die gemessene Temperatur oder die Verteilung der Temperatur kann zur Steuerung und/oder Regelung des Druckprozesses verwendet werden. Das erhitzte Filament wird durch eine Druckdüse 87 extrudiert oder pultrudiert. Die Druckdüse 87 kann zumindest teilweise aus einem Material gebildet sein, das Mikrowellenenergie absorbiert, um z.B. thermische Verluste in dem erhitzten Filament zu vermeiden.

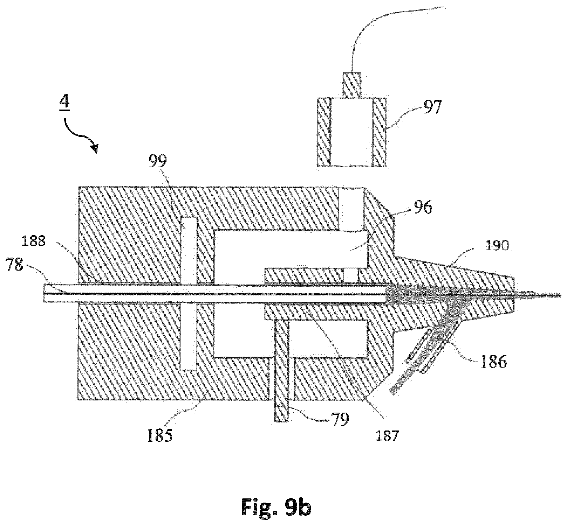

**Figur 9b** zeigt eine schematische Darstellung einer beispielhaften Mikrowellenheizvorrichtung 4 mit einem Koaxialresonator und einem Extrudierelement (Druckdüse 190) zum Extrudieren des in dem Koaxialresonator erhitzten Filaments 78. Die Mikrowellenheizvorrichtung 4 kann z.B. in einem der zuvor beschriebenen Systeme zur additiven Herstellung von Formen eingesetzt werden.

Der Koaxialresonator weist eine durch einen Außenleiter 185 gebildete Resonanzammer 96 auf, in die Mikrowellenstrahlung mittels der Mikrowellenantenne bzw. des Koppelstiftes 79 eingekoppelt wird. Die Resonanzkammer 96 kann eine im Wesentlichen zylindrische Form mit einer Längsachse aufweisen.

Der Koaxialresonator umfasst ferner ein elektrisch leitfähiges Element 187, welches sich über einen Teil der Gesamtlänge der Resonanzkammer 96 erstreckt und den Innenleiter oder einen Teil des Innenleiters des Koaxialresonators bildet. Bei dem in Figur 9b zeigten Beispiel ist das elektrisch leitfähige Element 187 in der Nähe des Filamentauslasses des Koaxialresonators ausgebildet. Ein Ende des elektrisch leitfähigen Elements 187 ist elektrisch mit dem Außenleiter 185 verbunden. Es ist ebenfalls möglich, beide Enden des elektrisch leitfähigen Elements 187 elektrisch mit dem Außenleiter 185 zu verbinden. Das elektrisch leitfähige Element 187 ist innen hohl, um einen Durchgang des Filaments durch das elektrisch leitfähige Element 187 zu ermöglichen. Das elektrisch leitfähige Element 187 kann z.B. in Form eines Hohlzylinders sein, wobei die Längsachse des Zylinders im Wesentlichen mit der Längsachse der Resonanzkammer 96 übereinstimmt.

Die Mikrowellenheizvorrichtung 4 umfasst ferner einen Mikrowellenfilter 99, welcher in der Nähe eines Filamenteinlasses der Resonanzkammer 96 angeordnet ist. Der Mikrowellenfilter 99 weist einen Durchlass (z.B. in Form einer Öffnung) für das Filament 78 auf.

Des Weiteren umfasst die Mikrowellenheizvorrichtung 4 eine Röhre 188 aus einem für die Mikrowellenstrahlung transparenten Material. Die Röhre 188 erstreckt sich entlang der gesamten Länge der Resonanzkammer 96 vom Filamenteinlass bis zum Filamentauslass. Dabei geht die Röhre 188 ebenfalls durch das elektrisch leitfähige Element 187 hindurch. Die Röhre 188 ist koaxial angeordnet, wobei die Längsachse der Röhre 188 im Wesentlichen mit der Längsachse der Resonanzkammer 96 und des elektrisch leitfähigen Elements 187 übereinstimmt. Das Filament 78 erstreckt sich entlang der Längsachse der Röhre 188 und wird von der Röhre umschlossen. Die Röhre 188 dient der Ausrichtung des Filaments 78 im Resonator bzw. in der Resonanzkammer 96.

Die Mikrowellenheizvorrichtung 4 umfasst ferner einen kontaktlosen Temperatursensor 97, welcher durch eine Öffnung in der Resonanzkammer und dem die Resonanzkammer bildenden Außenleiter 95 die Temperatur des Filaments 78 misst. Der kontaktlose Temperatursensor 97 kann z.B. eine Infrarotkamera sein.

Das kontinuierliche Filament 78 (z.B. aus einem faserverstärkten Polymer bzw. Polymerwerkstoff) geht durch den Mikrowellenfilter 99 hindurch und tritt durch den Filamenteinlass in die koaxiale Resonanzammer 96 ein. Das Filament 78 wird durch die Resonanzkammer 96 befördert und tritt aus der Resonanzkammer 96 aus. Anschließend wird das erhitzte Filament durch die Druckdüse 190 extrudiert.

Das Filament 78 kann elektrisch leitfähig oder elektrisch nicht leitfähig sein. In einem ersten Beispiel ist das Filament 78 elektrisch leitfähig, wobei das elektrisch leitfähige Filament 78 und das elektrisch leitfähige Element 187 den Innenleiter des koaxialen Resonators bilden. Beim Durchgang durch die Resonanzkammer 96 wird das Filament 78 durch die in die Resonanzkammer eingekoppelte Mikrowellenstrahlung erhitzt. In einem zweiten Beispiel ist das Filament 78 nicht elektrisch leitfähig, so dass der Innenleiter des koaxialen Resonators allein durch das elektrisch leitfähige Element 187 gebildet wird. In diesem Beispiel wird das Filament ebenfalls direkt in der Resonanzkammer 96 erhitzt. Der Aufbau der Resonanzkammer 96 in den beiden Beispielen ist im Prinzip gleich oder ähnlich, wobei die Frequenz bzw. der Frequenzbereich, für die die Resonanzkammer berechnet und/oder optimiert ist, unterschiedlich sein kann. Wie oben beschrieben, hängt die Frequenz von der Länge der Resonanzkammer 96 ab. Die Länge der Resonanzkammer 96 ist vorzugsweise eine Resonanzlänge, die im Fall eines leitfähigen Filaments mindestens λ/2 oder ein Vielfaches von λ/2 bzw. im Fall eines nicht leitfähigen Filaments mindestens λ/4 oder ein ungeradzahliges Vielfaches von λ/4 betragen kann.

Die Resonanzkammer 96 mit dem elektrisch leitfähigen Element 187, das elektrisch an einem Ende mit dem die Resonanzkammer 96 bildenden Außenleiter 185 verbunden ist, ist eine Single-Mode Resonanzkammer, in der eine TEM Welle angeregt wird. Das elektrische Feld der TEM Welle ist in die Richtung senkrecht zum Innenleiter polarisiert, d.h. senkrecht zur Längsrichtung der Resonanzkammer 96. Das elektrische Feld weist ein Maximum auf dem Innenleiter und dem Filament auf und nimmt in radialer Richtung proportional zu 1/r ab. Dadurch können eine maximale Penetrationstiefe des Filaments und eine effektive Absorption der Mikrowellenergie im Filament erzielt werden. Ferner kann eine gleichmäßige Erwärmung des Filaments erzielt werden.

Das aus der Resonanzkammer 96 austretende, erhitzte 78 Filament tritt in die Druckdüse 190 ein und wird durch die Druckdüse 190 extrudiert. Die Druckdüse 190 ist an dem Filamentauslass des Koaxialresonators angeordnet bzw. mit dem Filamentauslass des Koaxialresonators verbunden. Bei dem in Figur 9b gezeigten Beispiel ist die Druckdüse 190 eine Extrussionsdrüse, Durch die Extrusionskraft kann die Reibung zwischen dem Filament 78 und der Druckdüse 190 reduziert und somit die Druckgeschwindigkeit und das Druckvermögen erhöht werden. Die Druckdüse 190 kann ferner einen offenen Port bzw. Eingang aufweisen, in den thermoplastischer Kunststoff oder Polymerharz 186 eingeführt wird. Der thermoplastische Kunststoff oder das Polymerharz 186 kann durch das erhitzte Filament 78, durch eine Mikrowellenquelle, durch eine Widerstandsheizung oder durch eine Kombination derer erwärmt werden.

Die Innenflächen der Druckdüse 190 können zumindest teilweise mit einem Thermoisolationsmaterial (wie z.B. Keramik, PTFE, etc.) beschichtet oder bedeckt sein, um Wärmeverluste zu minimieren.

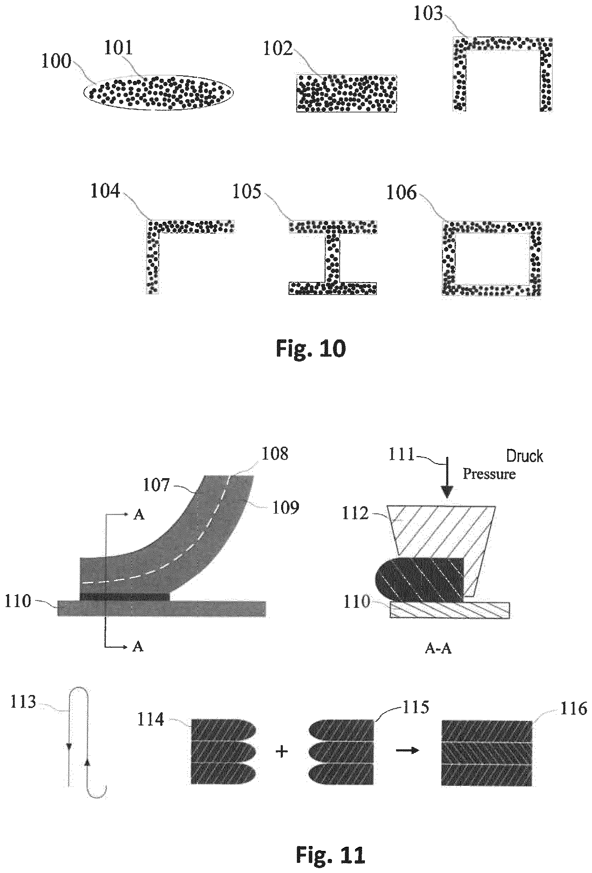

**Figur 10** zeigt beispielhafte Querschnitte eines gedruckten Filaments. Wird z.B. ein kreisrundes kontinuierliches Filament angewandt, weist das gedruckte Filament (Ausgangsfilament) im Allgemeinen einen elliptischen Querschnitt 100 auf. Die Faser bzw. die Faserverstärkung 101 ist innerhalb des Filaments verteilt. Abhängig von der spezifischen Anwendung kann mittels einer Pultrusionsdüse der Querschnitt des Filaments geändert werden. So kann ein Filament mit einem rechteckigen Querschnitt 102, einem U-förmigen Querschnitt 103, einem L-förmigen Querschnitt 104, einem I-förmigen Querschnitt 105 oder einem planen Querschnitt 106 erhalten werden. Bei einem solchen Filament mit einem nicht kreis- oder ellipsenförmigen Querschnitt kann eine spezielle Düse (z.B. eine Heizdüse) verwendet werden, wie z.B. die in **Figur 11** gezeigte Düse. Die Druckdüse kann eine gekrümmte Düse 107 sein, wie in Fig. 11, oben links gezeigt. Mit Hilfe der gekrümmten Druckdüse 107 kann das kontinuierliche Filament sanft auf der Druckoberfläche 110 aufgebracht werden. Die Druckdüse 107 kann zumindest eine Nut 109 aufweisen. Die zumindest eine Nut 109 kann sich parallel zur Achse der Druckdüse 110 erstrecken. Dadurch ist es möglich, Filamente mit unterschiedlichen Querschnittsformen zu extrudieren oder zu pultrudieren. Figur 11, oben rechts zeigt einen Querschnitt entlang der Linie A-A der Druckdüse 107. Das Filament kann beispielsweise einen Querschnitt aufweisen, dessen Form eine im Wesentlichen rechteckige Form mit zumindest einer flachen Seite und zumindest einer gezackten Seite, welche eine Mehrzahl von ellipsenförmigen Abschnitten aufweist, wie in Figur 11, unten rechts gezeigt. Bei einem Zickzackverlauf der Druckbahn auf der Druckoberfläche, wie in Figur 11, unten links gezeigt, überlappen und greifen die ellipsenförmigen Abschnitte zweier benachbarter Filamente 114 und 115 ineinander, um eine kompakte zusammengesetzte Druckstruktur 116 zu bilden, die im Wesentlichen frei von leeren Stellen ist. Da die flachen Seiten der Filamente nach außen angeordnet sind, kann somit eine sehr glatte gedruckte Struktur 116 ohne Wellen oder Kräuseln realisiert werden.

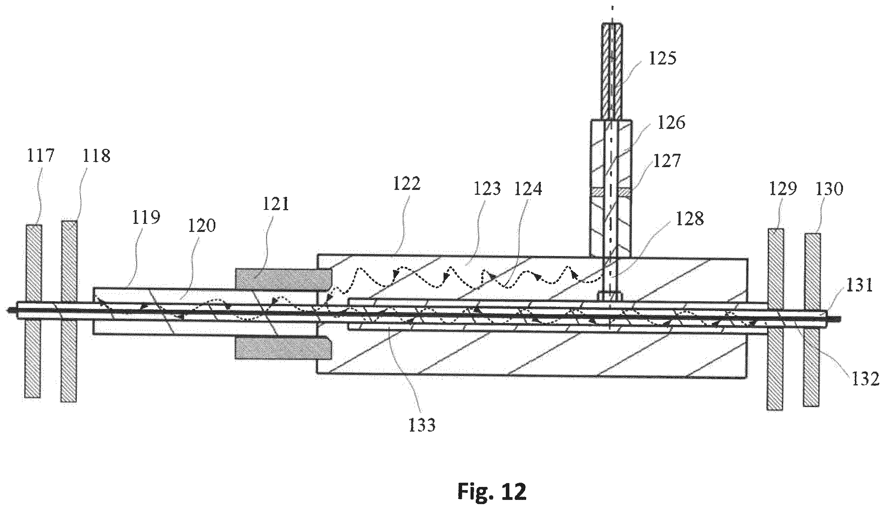

**Figur 12** zeigt schematisch eine beispielhafte Mikrowellendruckvorrichtung mit mehreren Resonatoren, die eine gleichmäßige Erhitzung des Filaments ermöglicht. Jeder der Resonatoren kann den in Zusammenhang mit den vorigen Figuren beschriebenen Aufbau aufweisen. Vorzugsweise ist jeder der Resonatoren ein Koaxialresonator, wobei erfindungsgemäß mindestens einer der Resonatoren ein Koaxialresonator ist. Das Filament 132 ist vorzugsweise aus einem elektrisch leitfähigen Material gebildet, z.B. aus einem faserverstärkten Polymerverbundwerkstoff, wie einem karbonfaserverstärkten PEEK Verbundwerkstoff. Eine Mikrowellenenergiequelle (z.B. 500 W Mikrowellenenergiequelle) wird mittels eines Hochfrequenzkabels mit einem Mikrowellenapplikator 125 (z.B. einem 50 Ohm Adapter) verbunden. Ein koaxiales Koppelstück bzw. Koppelelement 126 in der Abmessung einer Viertelwellenlänge reduziert die Reflexion der Mikrowellenstrahlung. Das Innere des koaxialen Koppelstücks bzw. Koppelelements 126 kann mit Luft gefüllt werden. Eine Stützplatte 127 (z.B. eine Polytetrafluorethylen (PTFE) Platte) fixiert die Position des inneren Leiters.

Die Mikrowellendruckvorrichtung umfasst einen ersten Koaxialresonator mit einem ersten Resonanzhohlraum 122, der innerhalb eines Gehäuses (z.B. aus Metall) geformt ist. Die Mikrowellendruckvorrichtung umfasst ferner einen zweiten Koaxialresonator mit einem zweiten Resonanzhohlraum 119, der innerhalb einer Röhre (z.B. aus Metall) geformt ist. Der erste Resonanzhohlraum 122 und der zweite Resonanzhohlraum sind miteinander verbunden und weisen eine gemeinsame Längsachse auf. Das Filament 132 erstreckt sich zentral entlang der Längsachse durch die beiden Resonanzhohlräume 119 und 122 hindurch. Die Resonanzhohlräume 119 und 122 können mit Luft oder anderem Gas gefüllt werden. Eine Röhre 133 aus Messing oder einem anderen geeigneten leitfähigen Material erstreckt sich durch den ersten Resonanzhohlraum 122 und stellt den inneren Leiter (Innenleiter) des ersten Resonanzhohlraums 122 dar. Das Innere der Messingröhre 133 bildet zugleich den Resonanzhohlraum eines dritten Koaxialresonators (d.h. die Messingröhre 133 bildet den Außenleiter des dritten Koaxialresonators). Innerhalb der Messingröhre 133 ist optional eine Röhre 131 aus Quarz oder einem anderen für die Mikrowellenstrahlung transparenten Material angeordnet. Die Quarzröhre 131 (Filamentfixiereinrichtung) erstreckt sich über den gesamten ersten Resonanzhohlraum 122 sowie optional über den gesamten zweiten Resonanzhohlraum 119 und fixiert das Filament 132 in einer zentralen Position (im Wesentlichen entlang der Längsachse). Das elektrisch leifähige Filament 132 dient als innerer Leiter des dritten Koaxialresonators und des zweiten Koaxialresonators. Im dritten Resonanzhohlraum kann eine hohe Intensität des elektrischen Felds realisiert werden. Dies ermöglich ein schnelles und gleichmäßiges Erhitzen des Filaments 132.

Die breitbandigen Mikrowellenfilter 117, 118, 129 und 130, die vorzugsweise mit Keramikplatten gefüllt sind, schirmen die Resonanzhohlräume ab.

Die Mikrowellenenergie wird in den ersten Resonanzhohlraum 122 eingekoppelt. Der Hauptanteil des Mikrowellenenergietransfers folgt der Welle 124, wobei am Kontaktabschnitt zwischen dem ersten Resonanzhohlraum 122 und dem dritten Resonanzhohlraum die Mikrowellenenergie in zwei aufgeteilt wird. Der erste Resonanzhohlraum 122 dient der Einkopplung der Mikrowellenenergie in den zweiten Resonanzhohlraum 119 und in den dritten Resonanzhohlraum 133.

Das Filament 132 wird in dem zweiten Resonanzhohlraum 119 und dem dritten Resonanzhohlraum 133 erhitzt. Um eine Frequenzverschiebung aufgrund der sich mit dem Anstieg der Temperatur verändernden dielektrischen Eigenschaften zu kompensieren, kann eine Anpassungseinrichtung 121 verwendet werden, wobei die Länge der Anpassungseinrichtung 121, die in den ersten Resonanzhohlraum 122 hineinragt, variiert bzw. eingestellt werden kann. Die Anpassungseinrichtung 121 ist als eine metallische Röhre ausgebildet, die elektrisch mit den Resonanzhohlräumen 122 und 119 verbunden ist. Ferner kann die Länge der Röhre 120 und somit die Länge des zweiten Hohlraums 119 ebenfalls variabel bzw. einstellbar sein.

Die Mikrowellendruckvorrichtung kann wie oben beschrieben an einer mehrachsigen CNC Maschine oder einem Roboterarm angebracht werden. Die Energie, Frequenz und/oder Phase der Mikrowellenstrahlung können verändert werden, um eine gleichmäßige Temperaturverteilung entlang des Filaments zu erzielen.

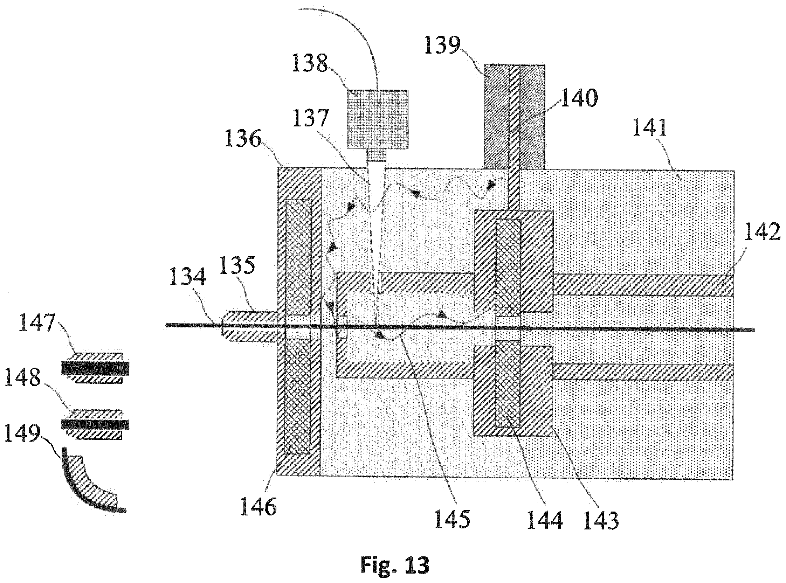

**Figur 13** zeigt schematisch eine weitere beispielhafte Mikrowellendruckvorrichtung mit einer Mikrowellenheizung. Das kontinuierliche Filament 134 kann aus einem faserverstärkten Polymerverbundwerkstoff, wie z.B. aus einem Nylon-Karbon kevlarfaserverstärkten Verbundwerkstoff. Der Nylon-Karbon Werkstoff kann eine Mischung aus reinem Nylon mit zerhackter Karbonfaser sein. Die Mikrowellendruckvorrichtung umfasst ein Gehäuse (z.B. aus Metall), in dem ein Hohlraum 141 gebildet ist. Der Hohlraum 141 kann z.B. mit Luft oder einem anderen geeigneten Gas gefüllt werden. Das Filament 134 erstreckt sich über den Resonanzhohlraum 141 und wird beim Durchgang durch den Hohlraum 141 erhitzt. Der Hohlraum 141 stellt somit einen Heizhohlraum dar. Die Mikrowellendruckvorrichtung umfasst eine Druckdüse 135, die an dem Auslass für das Filament des Resonanzhohlraums 141 angeordnet ist. Die Druckdüse 135 kann aus Keramik, Glas oder einem anderen Material mit glatten inneren Flächen gebildet sein. Die Druckdüse 135 kann ferner eine zusätzliche Heizvorrichtung umfassen, wie z.B. eine elektrische Heizvorrichtung. Mit der zusätzlichen Heizvorrichtung kann die Oberflächentemperatur des im Hohlraum 141 mittels Mikrowellenstrahlung erhitzten Filaments 134 zusätzlich erhöht werden, um so den Druckprozess weiter zu verbessern.

Die Mikrowellenstrahlung wird mittels des Koaxialkabels 139 in den Hohlraum 141 eingekoppelt. Der Innenleiter 140 des Koaxialkabels 139 ist mit dem Ring 143 verbunden. Der Ring 143 ist ein Bestandteil eines hohlen inneren Leiters 142, das zentral im Hohlraum 141 angeordnet. Der Hohlraum 141 und der innere Leiter 142 weisen eine gemeinsame Längsachse auf, entlang derer sich das Filament erstreckt. Das kontinuierliche Filament, der innere Leiter 142 und der Hohlraum 141 bilden somit einen Koaxialresonator.

Zwei Mikrowellenfilter 144 und 146, die vorzugsweise mit dielektrischen Platten (z.B. aus Keramik) gefüllt sind, werden eingesetzt, um das Austreten von Mikrowellenstrahlung aus dem Resonator zu reduzieren oder zu verhindern.

Das kontinuierliche Filament 134 wird in der Nähe des Mikrowellenfilters 146 erhitzt. Der Hauptpfad des Mikrowellenenergietransfers folgt der gekrümmten Linie 145. Die Temperatur des Filaments 134 wird mittels eines Sensors 138 (z.B. eines Pyrometers) gemessen. Die von dem Filament ausgestrahlte Infrarotstrahlung geht durch Öffnungen in dem inneren Leiter 142 und dem Gehäuse hindurch und wird vom Sensor 138 detektiert. Mit einem Pyrometer kann die Temperatur präzise gemessen werden auch wenn sich das Filament mit einer hohen Geschwindigkeit bewegt.

Durch eine Änderung der Größe der Druckdüse 135 kann der Durchmesser des extrudierten Filaments verändert bzw. eingestellt werden. Die Druckdüse 135 kann unterschiedliche Formen aufweisen. Mögliche Beispiele sind in Figur 13 gezeigt. So kann z.B. je nach Verwendung zwischen einer geraden Druckdüse 147 mit einem größeren inneren Durchmesser, einer geraden Druckdüse 148 mit einem kleineren inneren Durchmesser und einer gekrümmten Düse 149 umgeschaltet werden.

Die Länge des inneren Leiters 142 ist vorzugsweise einstellbar, um den gesamten Resonator einstellen bzw. tunen zu können bzw. auf die Frequenz der Mikrowellenstrahlung abzustimmen. Alternativ oder zusätzlich zu dem Einstellen bzw. Tunen des Resonators kann eine verstimmbare Mikrowellenquelle verwendet werden. In diesem Fall wird die Frequenz der Mikrowellenstrahlung auf die Resonanzfrequenz des Resonators abgestimmt. Die Mikrowellenleistung kann abhängig von dem Filamentquerschnitt, der Druckgeschwindigkeit und/oder der zu erzielenden Filamenttemperatur im Bereich von wenigen Watt bis hin zu einigen KW liegen. Die Frequenz der Mikrowellenstrahlung kann im Bereich von 300 MHz bis 6,0 GHz liegen. Andere Werte sind ebenfalls möglich. Die Stärke, Frequenz und/oder Phase der Mikrowellenstrahlung können variabel bzw. einstellbar sein, um den Wirkungsgrad der Energieübertragung in den Resonator und damit in das Filament zu maximieren.

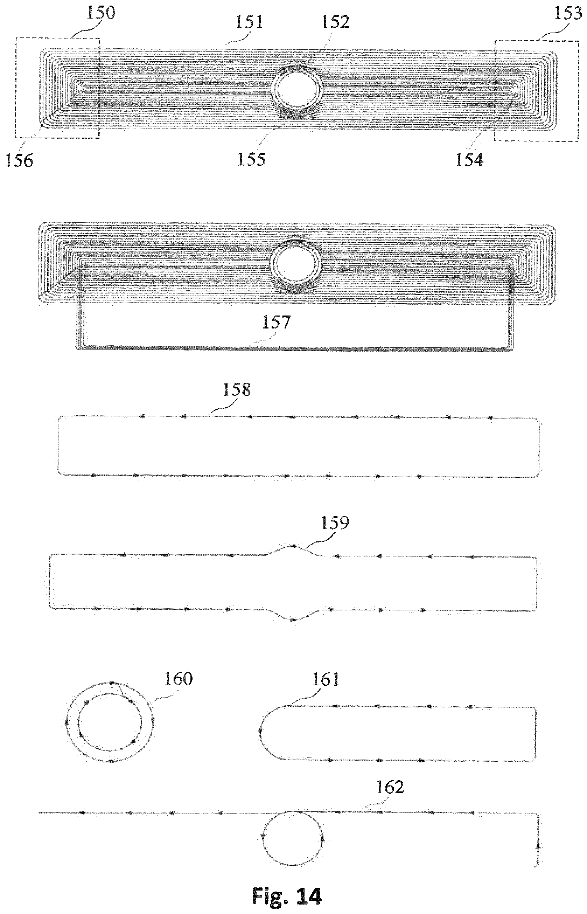

**Figur 14** zeigt ein Beispiel eines Druckpfades für eine rechteckige Form mit einer Öffnung in der Mitte. Das kontinuierliche Filament weist einen sehr guten Randversatz und gute Kopiereigenschaften auf. Der Druckpfad wird spiralförmig fortgesetzt bis der Wenderaum zu klein wird, um das Filament zu stützen (wie z.B. im Bereich 154).

Basierend auf einer Spannungsanalyse treten die größten Spannungen im Bereich der Öffnung auf. Folglich wird im Bereich 152 um die Öffnung 155 die Filamentdichte von einem normalen auf einen hohen Wert kontinuierlich erhöht, um eine kontinuierliche Verstärkung der Öffnung 155 zu gewährleisten und die Stärke der Öffnung 155 zu erhöhen. Im Wendebereich 154 ist ein Schneiden des Filaments erforderlich.

Die Form weist ferner zwei Randbereiche 150 und 153 auf, die nach dem Drucken abgeschnitten werden können.

Es ist möglich, einen zusätzlichen Druckpfad 157 vorzugeben, um das Schneiden des Filaments zu vermeiden. Der zusätzliche Druckpfad 157 ermöglicht es, den Wendebereich 154 zu vergrößern. Ferner kann der Druckpfad lediglich einen Startpunkt und einen Endpunkt aufweisen. Der Druckpfad 156 ist so vorgegeben, dass sich die Drucktrajektorie nach und nach ändert.

Die Form wird senkrecht zu den beiden kurzen Seiten wie bei einer Zugfestigkeitsprüfung einer Last ausgesetzt. Gemäß einem Belastungsanalyseverfahren ist es vorteilhaft, unterschiedliche Arten von Drucktrajektorien vorzusehen. Die Drucktrajektorien können z.B. eine rechteckige Trajektorie 158, eine rechteckige Trajektorie mit Bogen 159, eine Kreisnachführung mit zwei oder mehreren konzentrischen Kreisen 160, eine halbkreisförmige Trajektorie 161 und eine unidirektionale kreisförmige Trajektorie 162 einschließen. Um eine hohe mechanische Festigkeit der Form zu erzielen, ist es vorteilhaft, die Pfade 158 und 159 zu verwenden.

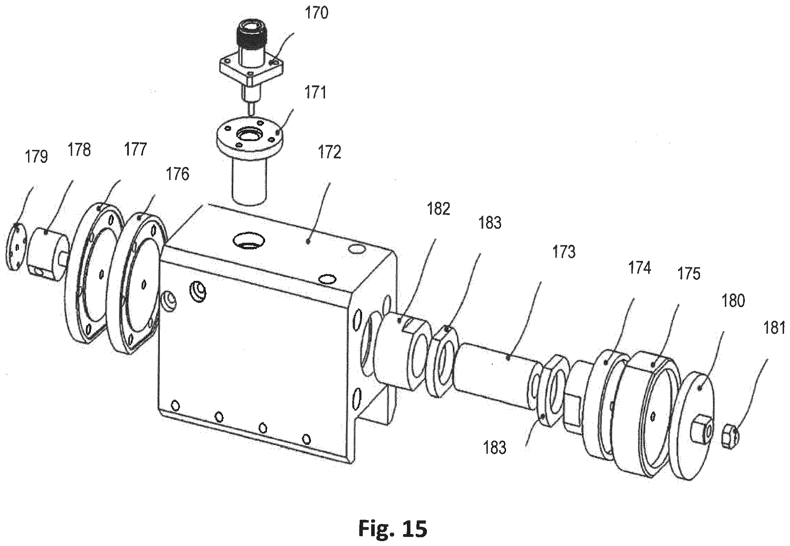

**Figur 15** zeigt die äußere Form einer beispielhaften Mikrowellendruckvorrichtung. Der Mikrowelleninput von einem flexiblen Kabel (nicht gezeigt) wird z.B. mit einer N-Typ Einbaubüchse (Adapter 170) mit dem koaxialen Koppelstück 171 verbunden. Die resonante Mikrowellenstrahlung füllt den Raum aus, der durch den Resonanzhohlraum 172 und das Kopplungsrohr 173 bis zum Mikrowellenfilter 174 definiert ist. Der Resonanzhohlraum 172 und das Kopplungsrohr 173 weisen im Inneren bevorzugt Atmosphärenluft auf. Mikrowellenfilter mit Hüllen 174, 175, 176 und 177 aus Metall verhindern das Austreten von Mikrowellenstrahlung. Das Matrixmaterial und das Fasermaterial werden in das Element 178 bzw. die Mischvorrichtung 178 gemischt. Die Mischvorrichtung 178 kann ferner eine zusätzliche Heizvorrichtung umfassen, wie z.B. eine elektrische Heizvorrichtung. Vorzugsweise durchlaufen die Fasern die Mikrowellendruckvorrichtung über die gesamte Länge vom Fasereinlass 179 bis zum Ende der Druckdüse 181. Der Imprägnierungsvorgang findet bevorzugt von dem Element 178 bis zum Element 180 statt. Das Element 180 und/oder die Druckdüse 181 kann ferner eine zusätzliche Heizvorrichtung umfassen, die es erlaubt, die Wärmeverluste über die Oberfläche des Filaments beim Durchlauf durch die Mikrowellendruckvorrichtung zu kompensieren. Die Position der Anpassvorrichtung 173 auf der Achse des Resonators ist einstellbar, um die Resonanzbedingungen in der Mikrowellendruckvorrichtung zu schaffen. Die Fixierringe 183 bzw. das Fixierelement 182 werden verwendet, um die Position des Anpasselements 173 zu fixieren.

In den obigen Beispielen ist durch die Verwendung eines Resonators möglich, eine räumliche Verteilung der im Resonator gebildeten stehenden Wellen der Mikrowellenstrahlung zu realisieren, die ein besonders vorteilhaftes, vorzugsweise gleichmäßiges Erwärmen des Filaments ermöglicht. Gleichzeitig kann das Austreten von potentiell schädlicher Mikrowellenstrahlung wesentlich reduziert werden. Dies verbessert die Sicherheit der Mikrowellendruckvorrichtung und maximiert die Absorption der Mikrowellenstrahlung durch das Filament. Ebenfalls ist es möglich, die Mikrowellendruckvorrichtung kompakter und kleiner zu gestalten, da auf eine zusätzliche Abschirmung der Mikrowellendruckvorrichtung verzichtet werden kann.

Das Filament kann ein elektrisch leitfähiges oder ein elektrisch nicht leitfähiges Filament sein. Bei einem elektrisch leitfähigen Filament dient das Filament als Innenleiter eines Koaxialresonators, so dass die Polarisationsrichtung des elektrischen Feldes in dem Resonator senkrecht zu der axialen Richtung des Filaments ist. Die Mikrowellenstrahlung kann somit besser in das Material des Filaments eindringen und dieses innen und außen erwärmen. Dabei kann, abhängig von den Fasereigenschaften, dem Faservolumengehalt und dem Durchmesser des Filaments, eine gleichmäßige Temperaturverteilung selbst bei großen Druckgeschwindigkeiten erreicht werden. Durch die gleichmäßige Temperaturverteilung kann die Verbundfestigkeit zwischen Fasern und Matrixmaterial verbessert werden. Dies erlaubt auch eine nach dem gleichen Prinzip, mit Mikrowellen unterstützte Vorimprägnierung vor dem Extrudieren oder dem Pultrudieren, was schließlich zu einer hohen mechanischen Festigkeit der gedruckten Teile führt.

Des Weiteren kann durch die Verwendung von mindestens zwei Mikrowellenfiltern der Austritt von Mikrowellenstrahlung aus der Mikrowellendruckvorrichtung auch bei einem elektrisch leitfähigen Filament verhindert oder minimiert werden, so dass die Sicherheit dieser Mikrowellendruckvorrichtung verbessert und zudem die Absorption der Mikrowellenstrahlung durch das Filament maximiert werden kann. Des Weiteren kann dadurch die Größe der Mikrowellendruckvorrichtung bzw. einer additiven Druckvorrichtung insgesamt verringert werden, da eine Kammer, die die gesamte Mikrowellendruckvorrichtung abschirmt, nicht nötig ist.

Durch Pultrusion der Fasern und des Matrixmaterials des Faserverbundwerkstoffs vor dem Bereitstellen des Filaments am Einlass der Mikrowellendruckvorrichtung gemäß einer Ausführungsform kann ein Filament mit einem hohen Anteil an Fasern und geringer Porosität bereitgestellt werden.

Die Mikrowellenheizvorrichtung kann ferner in einfacher Weise mit anderen Vorrichtungen, wie z.B. mit einer zusätzlichen Heizvorrichtung, kombiniert werden, wodurch ein hybrides System realisiert werden kann.

### Bezugszeichenliste

- 1: Filament
- 2,3: Rollen
- 4: Mikrowellenheizvorrichtung
- 5: Mikrowellenantenne
- 6: Mikrowellenfilter
- 7: Filamentschneideeinrichtung
- 8: Druckdüse
- 9: Temperatursensor
- 11: Hohlraum (Resonanzhohlraum bzw. Resonanzkammer)
- 12: Mikrowellenfilter
- 13: Filamenteingangsöffnung
- 14: extrudiertes Filament
- 15: Druckfläche
- 16: Steuer- und/oder Regelvorrichtung
- 18, 24: Wellenleiter
- 19: Hohlraumresonator
- 20: Außenleiter
- 21: Koppelstift
- 22, 23, 25, 26: Mikrowellenfilter
- 27: Röhre
- 28 - 31: Richtungen des elektrischen Feldes
- 33: Druckdüse
- 35, 36: Schneide
- 37: Filament
- 38: Druckfläche
- 42: Filamentkühlvorrichtung
- 43: Temperatursensor
- 44: extrudiertes Filament
- 45: Druckplatte
- 46: Wärmetauscher bzw. Wärmetransfervorrichtung
- 71: CAD-Modul zur Vorgabe oder zum Erzeugen eines CAD-Modells
- 72: Spannungsverteilungsanalysemodul
- 73: Druckpfaderzeugungsmodul
- 74: Simulationsmodul zur Druckpfadsimulation und Interferenzprüfung
- 75: Gcode-Erzeugungsmodul
- 751: Bewegungspfad
- 752: Druckgeschwindigkeit
- 753: Präzisionskompensation
- 76: Druckprozesssteuerung
- 761: Mikrowellensteuerung
- 762: Bewegungssteuerung,
- 763: Faserschneide
- 764: Überwachen und gegebenenfalls Anpassen des Druckprozesses
- 765: Alarmerzeugen und -bearbeiten
- 77: Imprägniervorrichtung
- 78: Filament
- 79: Koppelstift
- 80: Imprägnierungsmaterial
- 81, 82: Rollen
- 84,94: Rollen
- 83: T-Verbinder
- 87: Druckdüse
- 89, 92, 99: Mikrowellenfilter
- 90: Temperatursensor
- 91: Resonanzkammer
- 93: Mikrowellendruckvorrichtung
- 95: Pultrusionsdüse
- 96: Resonanzkammer,
- 97,98: Temperatursensoren
- 99: Mikrowellenfilter
- 100 - 106: Querschnitte eines Filaments
- 107: Druckdüse
- 109: Nut
- 110: Druckoberfläche
- 114, 115: Filament
- 116: Druckstruktur
- 117, 118: Mikrowellenfilter
- 119, 122: Hohlraum
- 125: Mikrowellenapplikator (z.B. Adapter)
- 126: Koppelstück bzw. Koppelelement
- 127: Stützplatte
- 129, 130: Mikrowellenfilter
- 131: Quarzröhre
- 132, 134: Filament
- 133: Messingröhre
- 135: Druckdüse
- 138: Temperatursensor
- 139: Koaxialkabel
- 141: Hohlraum
- 142: innerer Leiter
- 143: Ring
- 144, 146: Mikrowellenfilter
- 147 - 149: Druckdüse
- 150, 153: Randbereich
- 152: Bereich mit sich kontinuierlich verändernder Filamentdichte
- 154: Wendebereich
- 155: Öffnung
- 156: Druckpfad
- 157: zusätzlicher Druckpfad
- 158 - 162: Drucktrajektorien
- 170: Adapter
- 171: Koppelstück
- 172: Resonanzhohlraum
- 173: Kopplungsrohr
- 174 - 177: Mikrowellenfilterhüllen aus Metall
- 178: Element
- 179: Fasereinlass
- 180: Element
- 181: Druckdüse
- 182: Anpassungsvorrichtung
- 183: Fixierringe
- 185: Außenleiter
- 186: Thermoplastischer Kunststoff oder Polymerharz
- 187: elektrisch leitfähiges Element
- 188: Röhre aus einem für Mikrowellenstrahlung transparentem Material
- 190: Druckdüse
- 210: Mikrowellendruckvorrichtung
- 220: Gleitblock
- 230: Mikrowellenenergiequelle mit Verstärker
- 240: Pultrusionsvorrichtung
- 250: Filamentzieheinrichtung
- 260: Filament
- 270: flexibles Kabel
- 280: Motor
- 290: Linearführungsspindel
- 300: Druckplattform
- 320: Fixierblock
- 330: Bewegungssteuervorrichtung
- 340: Touchscreen
- S1: Start des Druckvorgangs
- S2: Erzeugen eines CAD-Modells
- S3: Initialisierung der additiven Druckvorrichtung und Einschalten der Mikrowellenenergiequelle
- S4: Start der Filamenterwärmung
- S5: Erreichen der Zieltemperatur des Filaments und Begin des Drucks
- S6: Andrücken des erwärmten Filaments in die Druckdüse
- S7: Anbringen des extrudierten Filaments auf die Druckfläche
- S8: Drucken des Filaments entlang des Druckpfades
- S9: Durchschneiden des Filaments
- S10: Überprüfen, ob der Druckvorgang beendet ist;
- S11: Ausschalten der Mikrowellendruckvorrichtung und der Mikrowellenquelle;
- S12: Ende des Druckvorgangs
- S20: Start des Erstellens eines Druckpfads
- S21: Bereitstellen eines CAD-Modells für die herzustellende Form
- S22: Erfassen des Materials des Filaments
- S23: Festlegen von Lasten bzw. Kräfte
- S24: Festlegen weiterer Designvorgaben oder Randbedingungen
- S25: Generieren eines Druckpfads
- S251: Generieren eines Druckpfads mit und/oder ohne Schichten
- S252: Generieren eines Druckpfads für eine vorgegebenen Menge und/oder ein vorgegebenes Volumen der Faser
- S26: Simulation und Spannungsanalyse
- S27: Überprüfen der Einhaltung der Designvorgaben
- S28: Generieren von GCode
- S29: Beenden des Erstellens eines Druckpfads

## Patentansprüche

1. Mikrowellendruckvorrichtung (210) umfassend:
einen Einlass für ein Filament (1, 37, 78, 114, 115, 132, 134, 260),
einen Auslass für das Filament (1, 37, 78, 114, 115, 132, 134, 260),
eine Mikrowellenheizvorrichtung (4) zum Erhitzen des Filaments mittels Mikrowellenstrahlung,
charakterisiert dadurch, dass
die Mikrowellenheizvorrichtung (4) zumindest einen Koaxialresonator (119, 122, 133) umfasst;
wobei der Koaxialresonator (119, 122, 133) durch einen Außenleiter (20), der einen Hohlraum (11, 96, 119, 122, 133, 141, 172) bildet, und einen koaxialen Innenleiter gebildet wird, und einen Mikrowellenstrahlungseingang zum Einkoppeln von Mikrowellenstrahlung umfasst; und
wobei das Erhitzen des Filaments im Koaxialresonator (119, 122, 133) stattfinden kann.

2. Mikrowellendruckvorrichtung (210) nach Anspruch 1, ferner umfassend zumindest eine Druckdüse (8, 33, 87, 107, 135, 147-150, 181, 190) zum Extrudieren oder Pultrudieren des erhitzten Filaments (1, 37, 78, 114, 115, 132, 134, 260).

3. Mikrowellendruckvorrichtung (210) nach Anspruch 2,
wobei die Druckdüse (8, 33, 87, 107, 135, 147-150, 181, 190) zumindest teilweise transparent für die Mikrowellenstrahlung ist; und/oder
wobei die Druckdüse (8, 33, 87, 107, 135, 147-150, 181, 190) ausgebildet ist, den Querschnitt des Filaments (1, 37, 78, 114, 115, 132, 134, 260) zu verändern; und/oder
wobei die Druckdüse (8, 33, 87, 107, 135, 147-150, 181, 190) eine Schneidevorrichtung (7, 35, 39, 40) zum Durchschneiden des extrudierten oder pultrudierten Filaments (14, 44) umfasst.

4. Mikrowellendruckvorrichtung (210) nach Anspruch 1, wobei das Filament (1, 37, 78, 114, 115, 132, 134, 260) elektrisch leitfähig ist und den Innenleiter des Resonators oder einen Teil eines Innenleiters des Koaxialresonators bildet.

5. Mikrowellendruckvorrichtung (210) nach Anspruch 4 ferner umfassend zumindest zwei Mikrowellenfilter (6, 12, 22-25, 89, 92, 99, 117, 118, 129, 130, 144, 146, 174-177) zum Reduzieren oder Verhindern der aus dem Koaxialresonator austretenden Mikrowellenstrahlung, wobei jeder der Mikrowellenfilter (6, 12, 22-25, 89, 92, 99, 117, 118, 129, 130, 144, 146, 174-177) einen Durchlass für das Filament (1, 37, 78, 114, 115, 132, 134, 260) aufweist.

6. Mikrowellendruckvorrichtung (210) nach einem der vorangegangenen Ansprüche,
wobei die Mikrowellenheizvorrichtung (4) eine Mehrzahl von Resonatoren (119, 122, 133) umfasst; und/oder
wobei die Mikrowellendruckvorrichtung mehrere Bereiche mit unterschiedlichen Temperaturen aufweist; und/oder
wobei die Mikrowellenstrahlung eine Frequenz im Bereich von 300 MHz bis 30 GHz, optional von 900 MHz bis 6 GHz; und/oder eine Leistung im Bereich von 1 W bis 10 kW aufweist.

7. Mikrowellendruckvorrichtung (210) nach Anspruch 6 und Anspruch 4, wobei die Mikrowellendruckvorrichtung (210) einen ersten Koaxialresonator (122), einen zweiten Koaxialresonator (119) und einen dritten Koaxialresonator (133) umfasst, wobei
der erste koaxiale Resonator (122) mit dem zweiten Koaxialresonator (119) verbunden ist, wobei eine Längsachse des ersten Koaxialresonators (122) und eine Längsachse des zweiten Koaxialresonators (119) parallel sind und eine gemeinsame Längsachse bilden; und
der dritte Koaxialresonator (133) konzentrisch innerhalb des ersten Koaxialresonators (122) angeordnet ist, wobei ein Innenleiter des ersten Koaxialresonators (122) einen Außenleiter des dritten Koaxialresonators (133) bildet.

8. Mikrowellendruckvorrichtung (210) nach einem der vorangegangenen Ansprüche, wobei der Einlass für das Filament (1, 37, 78, 114, 115, 132, 134, 260) zumindest einen Einlass für zumindest eine Faser und einen Einlas für ein Matrixmaterial eines Faserverbundstoffs umfasst.

9. Mikrowellendruckvorrichtung (210) nach einem der vorangegangenen Ansprüche ferner umfassend
eine Pultrusionsvorrichtung (240) zum Formen des Filaments (1, 37, 78, 114, 115, 132, 134, 260); und/oder
eine Filamentfixiereinrichtung (131) zum Fixieren des Filaments an einer bestimmten Position im Resonator; und/oder
zumindest eine zweite Heizvorrichtung zum Erhitzen des Filaments, vorzugsweise zum Erhitzen der Oberfläche des Filaments in einer Druckdüse (8, 33, 87, 107, 135, 147-150, 181, 190) am Ausgang der Mikrowellendruckvorrichtung (201).

10. Ein System (200) zur additiven Herstellung einer Form umfassend:
eine Mikrowellendruckvorrichtung (210) nach einem der vorangegangenen Ansprüche,
eine Druckplattform (45, 300),
eine Bewegungsvorrichtung zum Bewegen der Mikrowellendruckvorrichtung (210) und/oder der Druckplattform (45, 300) relativ zueinander; und
eine Steuerungs- und/oder Regelungsvorrichtung (16) zum Steuern und/oder Regeln des Druckprozesses.

11. Verfahren zur additiven Herstellung einer Form unter Verwendung von Mikrowellenstrahlung, umfassend die Schritte:
Bereitstellen eines Filaments (1, 37, 78, 114, 115, 132, 134, 260) an einem Einlass einer Mikrowellendruckvorrichtung (210), wobei die Mikrowellendruckvorrichtung (210) mindestens einen Koaxialresonator (119, 122, 133) umfasst;
Erwärmen des Filaments in dem Koaxialresonator (119, 122, 133) unter Verwendung von Mikrowellenstrahlung; und
Drucken des erwärmten Filaments (1, 37, 78, 114, 115, 132, 134, 260), um die Form zu bilden.

12. Verfahren nach Anspruch 11,
wobei das Filament (1, 37, 78, 114, 115, 132, 134, 260) elektrisch leitfähig ist und den Innenleiter des Koaxialresonators oder einen Teil eines Innenleiters des Koaxialresonators bildet; und/oder
wobei das Filament (1, 37, 78, 114, 115, 132, 134, 260) aus einem Faserverbundwerkstoff gebildet ist, der zumindest eine Faser und ein Matrixmaterial umfasst.

13. Verfahren nach Anspruch 12, wobei das Filament (1, 37, 78, 114, 115, 132, 134, 260) aus einem Faserverbundwerkstoff gebildet ist, der zumindest eine Faser und ein Matrixmaterial umfasst, und
wobei die zumindest eine Faser eine Kohlenstofffaser, Graphitfaser, Metallfaser, Glasfaser, Kunststofffaser, Keramikfaser, Borfaser, Stahlfaser und Steinfaser ist; und/oder
wobei die zumindest eine Faser eine kontinuierliche Faser ist.

14. Verfahren nach Anspruch 12 oder 13, wobei das Filament (1, 37, 78, 114, 115, 132, 134, 260) aus einem Faserverbundwerkstoff gebildet ist, der zumindest eine Faser und ein Matrixmaterial umfasst, und wobei das Verfahren ferner eine Pultrusion der Faser und des Matrixmaterials des Faserverbundwerkstoffs vor dem Bereitstellen des Filaments (1, 37, 78, 114, 115, 132, 134, 260) an dem Einlass der Mikrowellendruckvorrichtung (210) umfasst.

15. Verfahren nach einem der Ansprüche 12 bis 15, wobei die Mikrowellendruckvorrichtung (210) eine Mikrowellendruckvorrichtung gemäß einem der Ansprüche 1 bis 9 ist.

## Claims

1. A microwave printing device (210), comprising:
an inlet for a filament (1, 37, 78, 114, 115, 132, 134, 260),
an outlet for the filament (1, 37, 78, 114, 115, 132, 134, 260),
a microwave heating device (4) for heating the filament by means of microwave radiation,
**characterized in that**
the microwave heating device (4) comprises at least one coaxial resonator (119, 122, 133);
wherein the coaxial resonator (119, 122, 133) is formed of an outer conductor (20),
which forms a cavity (11, 96, 119, 122, 133, 141, 172), and a coaxial inner conductor, and a microwave radiation input for coupling in microwave radiation; and
wherein the filament can be heated in the coaxial resonator (119, 122, 133).

2. The microwave printing device (210) according to claim 1, further comprising at least one printing nozzle (8, 33, 87, 107, 135, 147-150, 181, 190) for extruding or pultruding the heated filament (1, 37, 78, 114, 115, 132, 134, 260).

3. The microwave printing device (210) according to claim 2,
wherein the printing nozzle (8, 33, 87, 107, 135, 147-150, 181, 190) is at least partially transparent to microwave radiation; and/or
wherein the printing nozzle (8, 33, 87, 107, 135, 147-150, 181, 190) is designed to alter the cross-section of the filament (1, 37, 78, 114, 115, 132, 134, 260); and/or
wherein the printing nozzle (8, 33, 87, 107, 135, 147-150, 181, 190) comprises a cutting device (7, 35, 39, 40) for cutting through the extruded or pultruded filament (14, 44).

4. The microwave printing device (210) according to claim 1, wherein the filament (1, 37, 78, 114, 115, 132, 134, 260) is electrically conductive and forms the inner conductor of the resonator or part of an inner conductor of the coaxial resonator.

5. The microwave printing device (210) according to claim 4, further comprising at least two microwave filters (6, 12, 22-25, 89, 92, 99, 117, 118, 129, 130, 144, 146, 174-177) for reducing or blocking the microwave radiation exiting the coaxial resonator, wherein each of the microwave filters (6, 12, 22-25, 89, 92, 99, 117, 118, 129, 130, 144, 146, 174-177) comprises a passage for the filament (1, 37, 78, 114, 115, 132, 134, 260).

6. The microwave printing device (210) according to any one of the preceding claims, wherein the microwave heating device (4) comprises a plurality of resonators (119, 122, 133); and/or
wherein the microwave printing device comprises multiple regions with different temperatures; and/or
wherein the microwave radiation has a frequency in the range of from 300 MHz to 30 GHz, optionally from 900 MHz to 6 GHz; and/or a power in the range of from 1 W to 10 kW.

7. The microwave printing device (210) according to claim 6 and claim 4, wherein the microwave printing device (210) comprises a first coaxial resonator (122), a second coaxial resonator (119) and a third coaxial resonator (133), wherein
the first coaxial resonator (122) is connected to the second coaxial resonator (119), wherein a longitudinal axis of the first coaxial resonator (122) and a longitudinal axis of the second coaxial resonator (119) are parallel and form a common longitudinal axis; and
the third coaxial resonator (133) is arranged concentrically inside the first coaxial resonator (122), wherein an inner conductor of the first coaxial resonator (122) forms an outer conductor of the third coaxial resonator (133).

8. The microwave printing device (210) according to any one of the preceding claims, wherein the inlet for the filament (1, 37, 78, 114, 115, 132, 134, 260) comprises at least one inlet for at least one fiber and an inlet for a matrix material of a fiber composite material.

9. The microwave printing device (210) according to any one of the preceding claims, further comprising
a pultrusion device (240) for shaping the filament (1, 37, 78, 114, 115, 132, 134, 260); and/or
a filament fixing apparatus (131) for fixing the filament in a particular position in the resonator; and/or
at least one second heating device for heating the filament, preferably for heating the surface of the filament in a printing nozzle (8, 33, 87, 107, 135, 147-150, 181, 190) at the output of the microwave printing device (201).

10. A system (200) for additively manufacturing a mold, comprising:
a microwave printing device (210) according to any one of the preceding claims, a printing platform (45, 300),
a movement device for moving the microwave printing device (210) and/or the printing platform (45, 300) relative to one another; and
an open-loop and/or closed-loop control device (16) for controlling the printing process in an open-loop and/or closed-loop manner.

11. A method for additively manufacturing a mold using microwave radiation, comprising the steps of:
providing a filament (1, 37, 78, 114, 115, 132, 134, 260) at an inlet of a microwave printing device (210), wherein the microwave printing device (210) comprises at least one coaxial resonator (119, 122, 133);
heating the filament in the coaxial resonator (119, 122, 133) using microwave radiation; and
printing the heated filament (1, 37, 78, 114, 115, 132, 134, 260) in order to form the mold.

12. The method according to claim 11,
wherein the filament (1, 37, 78, 114, 115, 132, 134, 260) is electrically conductive and forms the inner conductor of the coaxial resonator or part of an inner conductor of the coaxial resonator; and/or
wherein the filament (1, 37, 78, 114, 115, 132, 134, 260) is formed from a fiber composite material that comprises at least one fiber and a matrix material.

13. The method according to claim 12, wherein the filament (1, 37, 78, 114, 115, 132, 134, 260) is formed from a fiber composite material that comprises at least one fiber and a matrix material, and
wherein the at least one fiber is a carbon fiber, graphite fiber, metal fiber, glass fiber, plastics fiber, ceramic fiber, boron fiber, steel fiber and rock fiber; and/or
wherein the at least one fiber is a continuous fiber.

14. The method according to claim 12 or 13, wherein the filament (1, 37, 78, 114, 115, 132, 134, 260) is formed from a fiber composite material that comprises at least one fiber and a matrix material, and wherein the method further comprises pultrusion of the fiber and matrix material of the fiber composite material prior to provision of the filament (1, 37, 78, 114, 115, 132, 134, 260) at the inlet of the microwave printing device (210).

15. The method according to any one of claims 12 to 15, wherein the microwave printing device (210) is a microwave printing device according to any one of claims 1 to 9.

## Revendications

1. Dispositif d'impression à microondes (210) comportant :
une admission pour un filament (1, 37, 78, 114, 115, 132, 134, 260),
une évacuation pour le filament (1, 37, 78, 114, 115, 132, 134, 260),
un dispositif de chauffage aux microondes (4) pour le chauffage du filament par un faisceau de microondes,
**caractérisé en ce que**
le dispositif de chauffage aux microondes (4) comporte au moins un résonateur coaxial (119, 122, 133) ;
dans lequel le résonateur coaxial (119, 122, 133) est formé par un conducteur externe (20) formant un espace creux (11, 96, 119, 122, 141, 172) et un conducteur interne coaxial, et comporte une entrée de faisceau de microondes pour le couplage de faisceau de microondes ; et
dans lequel le chauffage du filament peut s'effectuer dans le résonateur coaxial (119, 122, 133).

2. Dispositif d'impression à microondes (210) selon la revendication 1, comportant en outre au moins une buse haute pression (8, 33, 87, 107, 135, 147-150, 181, 190) pour l'extrusion ou la pultrusion du filament (1, 37, 78, 114, 115, 132, 134, 260) chauffé.

3. Dispositif d'impression à microondes (210) selon la revendication 2,
dans lequel la buse haute pression (8, 33, 87, 107, 135, 147-150, 181, 190) est au moins partiellement transparente au faisceau de microondes ; et/ou
dans lequel la buse haute pression (8, 33, 87, 107, 135, 147-150, 181, 190) est conçue pour modifier la section transversale du filament (1, 37, 78, 114, 115, 132, 134, 260) ; et/ou
dans lequel la buse haute pression (8, 33, 87, 107, 135, 147-150, 181, 190) comporte un dispositif de coupe (7, 35, 39, 40) pour la coupe du filament extrudé ou pultrudé (14, 44).

4. Dispositif d'impression à microondes (210) selon la revendication 1, dans lequel le filament (1, 37, 78, 114, 115, 132, 134, 260) est électriquement conducteur et forme le conducteur interne du résonateur ou une partie du conducteur interne du résonateur coaxial.

5. Dispositif d'impression à microondes (210) selon la revendication 4, comportant en outre au moins deux filtres de microondes (6, 12, 22-25, 89, 92, 99, 117, 118, 129, 130, 144, 146, 174-177) destinés à réduire ou empêcher le faisceau de microondes sortant du résonateur coaxial, dans lequel chacun des filtres de microondes (6, 12, 22-25, 89, 92, 99, 117, 118, 129, 130, 144, 146, 174-177) présente un passage pour le filament (1, 37, 78, 114, 115, 132, 134, 260).

6. Dispositif d'impression à microondes (210) selon l'une des revendications précédentes
dans lequel le dispositif de chauffage aux microondes (4) comporte une pluralité de résonateurs (119, 122, 133) ; et/ou
dans lequel le dispositif d'impression à microondes présente plusieurs régions avec différentes températures ; et/ou
dans lequel le faisceau de microondes présente une fréquence dans la plage de 300 MHz à 30 GHz, optionnellement de 900 MHz à 6 GHz ; et/ou une puissance dans la plage de 1 W à 10 kW.

7. Dispositif d'impression à microondes (210) selon la revendication 6 et la revendication 4, dans lequel le dispositif d'impression à microondes (210) comporte un premier résonateur coaxial (122), un deuxième résonateur coaxial (119) et un troisième résonateur coaxial (133), dans lequel
le premier résonateur coaxial (122) est relié au deuxième résonateur coaxial (119), dans lequel un axe longitudinal du premier résonateur coaxial (122) et un axe longitudinal du deuxième résonateur coaxial (119) sont parallèles et forment un axe longitudinal commun ; et
le troisième résonateur coaxial (133) est disposé de façon concentrique à l'intérieur du premier résonateur coaxial (122), dans lequel le conducteur interne du premier résonateur coaxial (122) forme un conducteur externe (20) du troisième résonateur coaxial (133).

8. Dispositif d'impression à microondes (210) selon l'une des revendications précédentes, dans lequel l'admission pour le filament (1, 37, 78, 114, 115, 132, 134, 260) comporte au moins une admission pour au moins une fibre et une admission pour un matériau de matrice
d'une matière composite fibreuse.

9. Dispositif d'impression à microondes (210) selon l'une des revendications précédentes, comportant en outre
un dispositif de pultrusion (240) destiné à former le filament (1, 37, 78, 114, 115, 132, 134, 260) ; et/ou
un dispositif de fixation de filament (131) destiné à fixer le filament à un position déterminée dans le résonateur ; et/ou
au moins un deuxième dispositif de chauffage destiné à chauffer le filament, de préférence à chauffer la surface du filament dans une buse haute pression (8, 33, 87, 107, 135, 147-150, 181, 190) à la sortie du dispositif d'impression à microondes (201).

10. Système (200) de fabrication additive d'un moule comportant
un dispositif d'impression à microondes (210) selon l'une des revendications précédentes,
une plateforme d'impression (45, 300),
un dispositif de déplacement destiné à déplacer le dispositif d'impression à microondes (210) et/ou la plateforme d'impression (45, 300) l'un par rapport à l'autre ; et
un dispositif de commande et/ou de réglage (16) destiné à commander et/ou à régler le processus d'impression.

11. Procédé de fabrication additive d'un moule à l'aide d'un faisceau de microondes, comportant les étapes suivantes :
mise à disposition d'un filament (1, 37, 78, 114, 115, 132, 134, 260) au niveau d'une admission d'un dispositif d'impression à microondes (210), dans lequel le dispositif d'impression à microondes (210) comporte au moins un résonateur coaxial (119, 122, 133) ;
chauffage du filament dans le résonateur coaxial (119, 122, 133) à l'aide d'un faisceau de microondes ; et
impression du filament (1, 37, 78, 114, 115, 132, 134, 260) chauffé, pour former le moule.

12. Procédé selon la revendication 11,
dans lequel le filament (1, 37, 78, 114, 115, 132, 134, 260) est électriquement conducteur et forme le conducteur interne du résonateur coaxial ou une partie d'un conducteur interne du résonateur coaxial ; et/ou
dans lequel le filament (1, 37, 78, 114, 115, 132, 134, 260) est constitué d'une matière composite fibreuse comportant au moins une fibre et un matériau de matrice.

13. Procédé selon la revendication 12, dans lequel le filament (1, 37, 78, 114, 115, 132, 134, 260) est constitué d'une matière composite fibreuse comportant au moins une fibre et un matériau de matrice, et
dans lequel l'au moins une fibre est une fibre de carbone, une fibre de graphite, une fibre métallique, une fibre de verre, une fibre de plastique, une fibre céramique, une fibre de bore, une fibre d'acier et une fibre de pierre ; et/ou
dans lequel l'au moins une fibre est une fibre continue.

14. Procédé selon la revendication 12 ou 13, dans lequel le filament (1, 37, 78, 114, 115, 132, 134, 260) est constitué d'une matière composite fibreuse comportant au moins une fibre et un matériau de matrice, et dans lequel le procédé comporte en outre une pultrusion de la fibre et du matériau de matrice de la matière composite fibreuse avant la mise à disposition du filament (1, 37, 78, 114, 115, 132, 134, 260) au niveau de l'admission du dispositif d'impression à microondes (210).

15. Procédé selon l'une des revendications 12 à 15, dans lequel le dispositif d'impression à microondes (210) est un dispositif d'impression à microondes selon l'une des revendications 1 à 9.
